# EUROPEAN PATENT APPLICATION

(11) **EP 4 700 177 A1**
(43) Date of publication of application: **25.02.2026**
(21) Application number: 24835235.3
(22) Date of filing: 20.06.2024
(51) Int. Cl.: E01H 1/08

(54) **CUTTING ASSEMBLY SUITABLE FOR BLOWER VACUUM MACHINE, AND BLOWER VACUUM MACHINE**

(30) Priority: 03.07.2023 CN 202310812424
(71) Applicant: Nanjing Chervon Industry Co., Ltd., Nanjing, Jiangsu 211106 (CN)
(72) Inventor: LI, Jingwei, Nanjing, Jiangsu 211106 (CN); YAMAOKA, Toshinari, Nanjing, Jiangsu 211106 (CN); GUO, Jianpeng, Nanjing, Jiangsu 211106 (CN)
(74) Representative: Sun, Yiming
(86) International application number: PCT/CN2024/100258
(87) International publication number: WO 2025/007752

(57) **Abstract**

Provided is a blower/vacuum. The blower/vacuum includes a body housing, a control board, an air suction port, an air blowing port, and a first assembly structure. The control board has a startup circuit for controlling the blower/vacuum to start or shut down. The air suction port is capable of connecting an air inlet cover, where the air inlet cover has an open state and a closed state, and when the air inlet cover is in the closed state, an airflow is capable of entering the air suction port through the air inlet cover. The air blowing port is capable of connecting an air blowing tube, where the air blowing tube has a mounted position and an unmounted position, the startup circuit is in an non-conducting state and the blower/vacuum is in a shutdown state when the air blowing tube is in the unmounted position, and the startup circuit is in an conducting state and the blower/vacuum is in a ready-to-start state when the air blowing tube is in the mounted position. The air inlet cover can remain in the closed state and the air blowing tube is capable of being mounted to the mounted position when the first assembly structure is in an assembled state.

## Description

This application claims priority to Chinese Patent Application No. 202310812424.7 filed with the China National Intellectual Property Administration (CNIPA) on Jul. 3, 2023, the disclosure of which is incorporated herein by reference in its entirety.

### TECHNICAL FIELD

The present application relates to a blower/vacuum and a cutting assembly applicable to the blower/vacuum.

### BACKGROUND

A blower/vacuum in the related art is a common power tool for outdoor cleaning and is mainly used for cleaning and collecting rubbish such as leaves. The blower/vacuum typically has an air blowing mode and an air suction mode. In the air blowing mode, the blower/vacuum blows air outward so that leaves scattered on the ground can be gathered. In the air suction mode, the blower/vacuum generates a suction force and cooperates with a collection device to be capable of sucking the leaves into the collection device, thereby avoiding manual cleaning and saving manpower and time.

When a user switches functions of the blower/vacuum, for example, the blower/vacuum is adjusted from the air suction mode to the air blowing mode, it is possible that an air blowing tube is mounted to a body housing, but the blower/vacuum is started due to erroneous operation in the case where an air inlet cover is not closed. As a result, a cutting assembly rotates without being shielded by the air inlet cover, causing safety hazards.

A cutting assembly of the blower/vacuum is constituted by multiple blades and a base that connects the blades. The cutting assembly of the blower/vacuum is used for chopping weeds and the like sucked by the blower/vacuum and then discharging the chopped weeds and the like into a collection bag. The structure of the cutting assembly affects the cutting efficiency and the cutting capability. Some cutting assemblies may perform incomplete cutting and insufficient chopping, thereby causing difficulty in collection and easy blockage.

In an existing blower/vacuum, a heat dissipation port in a heat dissipation air path is typically provided on a side of an electric motor. A heat dissipation airflow enters the blower/vacuum, sequentially flows through the electric motor and a control board, and then flows out. In a heat dissipation process, dust in the position where the electric motor is located is carried to the control board, thereby easily contaminating the control board.

An existing blower/vacuum with its power and thrust has certain difficulty in blowing objects that are heavier than fallen leaves such as gravel. In daily use, the existing blower/vacuum may not be able to exert its best performance.

In an existing blower/vacuum, a collection bag is typically fixed to the body of the blower/vacuum through a zipper or a band directly. As a result, the collection port through which fallen leaves enter the collection bag is relatively small, and it is difficult to collect the leaves. In addition, it is relatively time-consuming for the user to mount or detach the connection bag that is fixed through the zipper or the band.

This part provides background information related to the present application, and the background information is not necessarily the existing art.

### SUMMARY

The present application adopts the technical solutions below.

A blower/vacuum includes a body housing, a control board, an air suction port, an air blowing port, and a first assembly structure. The control board has a startup circuit for controlling the blower/vacuum to start or shut down. The air suction port is capable of connecting an air inlet cover, where the air inlet cover has an open state and a closed state, and when the air inlet cover is in the closed state, an airflow is capable of entering the air suction port through the air inlet cover. The air blowing port is capable of connecting an air blowing tube, where the air blowing tube has a mounted position and an unmounted position, the startup circuit is in an non-conducting state and the blower/vacuum is in a shutdown state when the air blowing tube is in the unmounted position, and the startup circuit is in an conducting state and the blower/vacuum is in a ready-to-start state when the air blowing tube is in the mounted position. The first assembly structure is used for assembling the air blowing tube, where the air inlet cover is in the closed state and the air blowing tube is capable of being mounted to the mounted position when the first assembly structure is in an assembled state, and the air inlet cover is in the open state and the air blowing tube is incapable of being mounted to the mounted position when the first assembly structure is in a non-assembled state.

In an example, the blower/vacuum further includes an identification component configured to identify the position of the air blowing tube, where the startup circuit is in the conducting state when the identification component identifies that the air blowing tube is in the mounted position.

In an example, the first assembly structure includes a first fitting portion and a second fitting portion, one of the air inlet cover and the body housing is provided with the first fitting portion, the other of the air inlet cover and the body housing is provided with the second fitting portion, and the first fitting portion and the second fitting portion fit each other to lock the air inlet cover and the body housing.

In an example, one end of the air inlet cover is rotatably connected to the body housing, and the other end of the air inlet cover is selectively engaged with the body housing.

In an example, the first fitting portion includes a first engaging protrusion, the second fitting portion includes a first engaging hook, and the first engaging protrusion is capable of being engaged with the first engaging hook.

In an example, the blower/vacuum further includes a second assembly structure for connecting the air blowing tube to the air inlet cover, where when the air blowing tube is in the mounted position, the air blowing tube is sleeved onto the body housing, and the second assembly structure is in an assembled state to lock the air blowing tube and the air inlet cover.

In an example, the second assembly structure includes a second engaging protrusion and a second engaging hook, one of the air inlet cover and the air blowing tube is provided with the second engaging protrusion, the other of the air inlet cover and the air blowing tube is provided with the second engaging hook, and the second engaging protrusion and the second engaging hook are capable of being engaged with each other.

In an example, the identification component is a contact switch or a non-contact switch, and the non-contact switch is one or more of a photoelectric switch, a pressure switch, and a Hall switch.

In an example, the identification component is the Hall switch, the Hall switch includes a Hall sensor and a magnet, the Hall sensor is disposed on the body housing, the magnet is disposed on the air blowing tube, and the Hall sensor is capable of sensing the magnet.

In an example, the blower/vacuum further includes an ejection mechanism, where the ejection mechanism is disposed on the body housing, and the ejection mechanism applies thrust to the air blowing tube along a separation direction when the air blowing tube is separated from the body housing.

A blower/vacuum includes: a body housing; an electric motor disposed in the body housing; a connecting housing disposed on a side of the body housing; a control board having a startup circuit for controlling the blower/vacuum to start or shut down and disposed in the connecting housing; an air inlet cover and an air suction port, where an airflow passes through the air inlet cover and enters the air suction port to reach the electric motor, the air inlet cover has an open state and a closed state, and the airflow is capable of passing through the air inlet cover and entering the air suction port when the air inlet cover is in the closed state; an air blowing tube and an air blowing port, where the air blowing tube has a mounted position and an unmounted position, the startup circuit is in an non-conducting state and the blower/vacuum is in a shutdown state when the air blowing tube is in the unmounted position, and the startup circuit is in an conducting state and the blower/vacuum is in a ready-to-start state when the air blowing tube is in the mounted position; and a first assembly structure for assembling the air blowing tube, where the air inlet cover is in the closed state and the air blowing tube is capable of being mounted to the mounted position when the first assembly structure is in an assembled state, and the air inlet cover is in the open state and the air blowing tube is incapable of being mounted to the mounted position when the first assembly structure is in a non-assembled state.

In an example, the air blowing tube is detachably disposed at the air blowing port.

In an example, the blower/vacuum has an air blowing mode and an air suction mode, and when the blower/vacuum is in the air blowing mode, the air inlet cover is closed, and the airflow passes through the air inlet cover, enters the air suction port to reach the electric motor, and then passes through the air blowing port and flows out from the air blowing tube.

In an example, the air suction port and the air blowing port are each provided on the body housing, and the air inlet cover and the air blowing tube are each connected to the body housing.

In an example, the blower/vacuum further includes an identification component configured to identify the position of the air blowing tube, where the startup circuit is in the conducting state when the identification component identifies that the air blowing tube is in the mounted position.

In an example, the first assembly structure includes a first fitting portion and a second fitting portion, one of the air inlet cover and the body housing is provided with the first fitting portion, the other of the air inlet cover and the body housing is provided with the second fitting portion, and the first fitting portion and the second fitting portion fit each other to lock the air inlet cover and the body housing.

In an example, one end of the air inlet cover is rotatably connected to the body housing, and the other end of the air inlet cover is selectively engaged with the body housing.

In an example, the blower/vacuum further includes a second assembly structure for connecting the air blowing tube to the air inlet cover, where when the air blowing tube is in the mounted position, the air blowing tube is sleeved onto the body housing, and the second assembly structure is in an assembled state to lock the air blowing tube and the air inlet cover.

In an example, the identification component is a contact switch or a non-contact switch, and the non-contact switch is one or more of a photoelectric switch, a pressure switch, and a Hall switch.

In an example, the blower/vacuum further includes an ejection mechanism, where the ejection mechanism is disposed on the body housing, and the ejection mechanism applies thrust to the air blowing tube along a separation direction when the air blowing tube is separated from the body housing.

A cutting assembly applicable to a blower/vacuum includes a base and a first blade. The base is rotatable about a rotation axis. The first blade is connected to the base, where the first blade is rotatable with the base about the rotation axis to implement a cutting function. The first blade includes a first cutting portion and a second cutting portion, the first cutting portion extends substantially along a first straight line, the second cutting portion extends substantially along a second straight line, the first cutting portion is connected to the base, the first cutting portion is located between the base and the second cutting portion, and the first straight line does not coincide with the second straight line. The length of the first cutting portion along the direction of the first straight line is a first length L1, the length of the second cutting portion along the direction of the second straight line is a second length L2, and the first length L1 is greater than the second length L2.

In an example, the first straight line and the second straight line form a first angle, and the first angle is greater than 10 degrees and less than 80 degrees.

In an example, the first blade further includes a transition portion located between the first cutting portion and the second cutting portion, and the transition portion is substantially arc-shaped.

In an example, the start point of the first cutting portion is connected to the base, the end point of the first cutting portion is connected to the transition portion, and the first cutting portion extends outward in an inclined manner relative to the base in the direction from the start point to the end point, and the start point of the second cutting portion is connected to the transition portion, and the second cutting portion extends outward in an inclined manner relative to the first cutting portion in the direction from the start point to an end point.

In an example, the number of first blades is greater than or equal to three.

In an example, the first straight line and the second straight line form a first angle, and the first angle is greater than 20 degrees and less than 80 degrees.

In an example, the cutting assembly further includes a second blade, where one end of the second blade is connected to the base, and the second blade extends along a third straight line.

In an example, the second blade has a third cutting portion, the length of the third cutting portion along the direction of the third straight line is a third length L3, and the ratio of the difference between the first length L1 and the third length L3 to the third length L3 is less than or equal to 30%.

In an example, the number of first blades is six.

In an example, a second angle is formed between the first straight line and the rotation axis, and the second angle is greater than 10 degrees and less than 80 degrees.

A cutting assembly applicable to a blower/vacuum includes blades and a base. The start point of each blade is connected to the base, and the base is rotatable about a rotation axis. The total blade length of the blade is defined as the total length of the connecting line between the start point of the blade and the end point of the blade. The blades include at least two types of blades that are first blades and second blades, respectively. The total blade length of each of the first blades is a first total length, the total blade length of each of the second blades is a second total length, and the first total length is greater than the second total length.

In an example, the number of the first blades is at least three.

In an example, the number of the first blades is three, and the number of the second blades is three.

In an example, the first blades are uniformly distributed about the rotation axis.

In an example, the first blades and the second blades are on the same side of the base.

In an example, each of the first blades includes a first cutting portion and a second cutting portion, the start point of the first cutting portion is connected to the base, the end point of the first cutting portion is connected to the second cutting portion, and the first cutting portion extends outward in an inclined manner relative to the base in the direction from the start point to the end point; and the start point of the second cutting portion is connected to the first cutting portion, and the second cutting portion extends outward in an inclined manner relative to the first cutting portion in the direction from the start point to the end point.

In an example, the first cutting portion extends along a first straight line, the second cutting portion extends along a second straight line, and the first straight line and the second straight line form a first angle.

In an example, a second angle is formed between the first straight line and the rotation axis.

In an example, a rotation trajectory of each of the first blades on a plane perpendicular to the rotation axis forms a circular surface with a diameter that is equal to a first diameter D1, a rotation trajectory of each of the second blades on a plane perpendicular to the rotation axis forms a circular surface with a diameter that is equal to a second diameter D2, and the ratio D2/D1 of the second diameter to the first diameter is greater than or equal to 0.3 and less than or equal to 0.9.

In an example, each of the first blades has a first cutting plane, each of the second blades has a second cutting plane, and a third angle is formed between the first cutting plane and the second cutting plane.

A blower/vacuum includes a housing, an electric motor, a control board, and a fan assembly. The housing has a heat dissipation port and an air blowing port. The electric motor is disposed in the housing. The control board is electrically connected to the electric motor. The fan assembly is connected to the electric motor, where the fan assembly is driven by the electric motor to generate an airflow. When the fan assembly rotates, at least part of the airflow flows in from the heat dissipation port, sequentially passes through the control board and the electric motor, and then flows out from the air blowing port.

In an example, the control board is disposed on a side of the electric motor facing away from the fan assembly.

In an example, the linear distance between the heat dissipation port and the control board is less than or equal to 5 cm.

In an example, the housing includes a body housing and a connecting housing disposed on a side of the body housing, the electric motor is disposed in the body housing, the control board is disposed in the connecting housing, and the heat dissipation port is provided on the connecting housing.

In an example, the blower/vacuum further includes a main handle, where the main handle is disposed on a side of the connecting housing facing away from the body housing.

In an example, the housing is provided with an air suction port corresponding to the fan assembly, and the airflow flows in from the air suction port, passes through the electric motor, and then flows out from the air blowing port.

In an example, the blower/vacuum further includes an air inlet cover, where the air inlet cover is disposed at the air suction port in an openable and closable manner.

In an example, the electric motor has an upper side and a lower side, and the control board and the fan assembly are located on the upper side of the electric motor and the lower side of the electric motor, respectively.

In an example, at least part of the airflow flows through the electric motor from the lower side of the electric motor when the fan assembly rotates.

In an example, the electric motor is a brushless motor.

A blower/vacuum includes an electric motor and a cutting assembly. The cutting assembly is at least partially disposed in a first cavity housing, where a sucked object is capable of passing through the cutting assembly and being discharged from the first cavity housing. The first cavity housing includes an outer housing and a lining body, the outer housing is disposed on the outer side of the lining body, the outer housing is made of a first material, the lining body is made of a second material, the impact strength of the second material is greater than the impact strength of the first material, and the impact strength of the second material is greater than or equal to 20 kJ/m2.

In an example, the impact strength of the second material is greater than or equal to 30 kJ/m2.

In an example, the impact strength of the first material is greater than or equal to 5 kJ/m2 and less than or equal to 20 kJ/m2.

In an example, the hardness of the first material is greater than the hardness of the second material.

In an example, the impact strength of the second material is greater than or equal to 40 kJ/m2.

In an example, the impact strength of the second material is greater than or equal to 50 kJ/m2.

In an example, the blower/vacuum further includes a fan assembly, where at least part of the fan assembly is accommodated in the first cavity housing, and the fan assembly is driven by the electric motor to generate an airflow.

In an example, the blower/vacuum further includes a body housing, where the electric motor is disposed in the body housing, and at least part of the body housing forms the first cavity housing.

In an example, the body housing has an air suction port and an air blowing port, the air suction port and the air blowing port each communicate with an inner cavity of the first cavity housing, and the cutting assembly is disposed close to the air suction port.

In an example, the body housing includes a first volute and a second volute which are configured to be snap-fitted with each other, and limiting protrusions are provided on the peripheral surface of the lining body and are sandwiched between the first volute and the second volute.

A blower/vacuum includes a body housing, an air suction port, an air blowing port, and a conversion member. An air suction tube is mountable to the air suction port. When the blower/vacuum is in an air suction mode, an airflow flows from the air suction tube into the air suction port and then flows out through the air blowing port. The conversion member is used for mounting a collection bag, where the collection bag is used for storing an object sucked by the air suction tube, the conversion member has a collection port, the sucked object enters the collection bag from the collection port, and the area of the collection port is greater than or equal to 250 square centimeters.

In an example, the area of the collection port is greater than or equal to 300 square centimeters.

In an example, the area of the collection port is greater than or equal to 350 square centimeters.

In an example, the blower/vacuum further includes a connecting portion, where the conversion member is connected to the connecting portion, and the connecting portion is disposed on or detachably connected to the body housing, where the air blowing port is opened and the collection bag is incapable of performing collection when the connecting portion and the conversion member are released from each other, and the air blowing port is closed and the collection bag is capable of performing the collection when the connecting portion and the conversion member are locked to each other.

In an example, one side of the connecting portion is rotatably connected to the conversion member, and the other side of the connecting portion and the conversion member are locked to or released from each other through a first fitting structure.

In an example, the first fitting structure is capable of being switched between a locked state and a released state through one-hand operation.

In an example, one of the connecting portion and the conversion member is provided with a first support shaft, the other of the connecting portion and the conversion member is provided with a first groove, the first support shaft is insertable into the first groove, and the conversion member is rotatable about the axis of the first support shaft.

In an example, the first fitting structure includes a third engaging protrusion and an operation member, the third engaging protrusion is disposed on the connecting portion, the operation member is disposed on the conversion member, the operation member is capable of being engaged with the third engaging protrusion to be in a locked state, and the first fitting structure is capable of being switched from the locked state to a released state by pressing the operation member.

In an example, the connecting portion is detachably mounted to the body housing.

In an example, an operation handle for a user to operate is disposed on the conversion member, an adapter assembly further includes the operation member for the user to operate to move the conversion member relative to the connecting portion, and the operation member is configured to be capable of being operated by a hand holding the operation handle when the user holds the operation handle, so as to unlock the conversion member and the connecting portion.

A blower/vacuum includes a body housing, an electric motor, and a battery pack coupling portion. The electric motor is disposed in the body housing. The battery pack coupling portion is used for mounting a battery pack, where the electric motor is powered by the battery pack. Power of the electric motor is greater than 1000 W.

In an example, the electric motor is a brushless motor.

A blower/vacuum includes a body housing, an electric motor, and a battery pack coupling portion. The electric motor is disposed in the body housing. The battery pack coupling portion is used for mounting a battery pack, where the electric motor is powered by the battery pack. The blower/vacuum has an air blowing mode, and thrust of the blower/vacuum is greater than 14.5 N in the air blowing mode.

In an example, the electric motor is a brushless motor.

A blower/vacuum includes a body housing, an electric motor, and a battery pack coupling portion. The electric motor is disposed in the body housing. The battery pack coupling portion is used for mounting a battery pack, where the electric motor is powered by the battery pack. The capacity of the battery pack is greater than or equal to 6 AH, and power of the electric motor is greater than 1200 W.

In an example, at least two battery packs are provided.

In an example, the electric motor is a brushless motor.

In an example, the blower/vacuum has an air blowing mode, and thrust of the blower/vacuum is greater than 14.5 N in the air blowing mode.

A cutting assembly applicable to a blower/vacuum includes blades and a base, where the start point of each of the blades is connected to the base, and the base is rotatable about a rotation axis. The blades include at least a first blade and a second blade, a rotation trajectory of the first blade on a plane perpendicular to the rotation axis forms a circular surface with a diameter that is a first diameter, a rotation trajectory of the second blade on a plane perpendicular to the rotation axis forms a circular surface with a diameter that is a second diameter, and the first diameter is different from the second diameter.

In an example, the ratio of the second diameter to the first diameter is greater than or equal to 0.3 and less than or equal to 0.9.

A blower/vacuum includes a body housing, an electric motor disposed in the body housing, and a battery pack coupling portion for mounting a battery pack, where the electric motor is powered by the battery pack. The electric motor is a brushless motor, and power of the electric motor is greater than 1000 W. The blower/vacuum has an air blowing mode and an air suction mode, and thrust of the blower/vacuum is greater than 14.5 N in the air blowing mode.

In an example, the capacity of the battery pack is greater than or equal to 6 AH.

In an example, the power of the electric motor is greater than 1200 W.

In an example, at least two battery packs are provided.

In an example, the capacity of the battery pack is greater than or equal to 6 AH, and the power of the electric motor is greater than 1200 W.

In an example, the thrust of the blower/vacuum is greater than 15.5 N.

In an example, the maximum rotational speed of the electric motor is greater than or equal to 8000 rpm.

In an example, the maximum air volume of the blower/vacuum is greater than or equal to 480 cfm.

In an example, the maximum wind speed of the blower/vacuum is greater than or equal to 100 mph.

In an example, the rated voltage of the battery pack is greater than or equal to 40 V.

A cutting assembly applicable to a blower/vacuum includes: a base rotatable about a rotation axis; and a first blade connected to the base, where the first blade is rotatable with the base about the rotation axis to implement a cutting function. The first blade includes a first cutting portion and a second cutting portion, the first cutting portion is connected to the base, and the first cutting portion is located between the base and the second cutting portion. The second cutting portion extends outward in an inclined manner relative to the first cutting portion in the direction from the start point to the end point. The length of the first cutting portion is a first length L1, the length of the second cutting portion is a second length L2, and the first length L1 is greater than the second length L2.

In an example, the first cutting portion extends substantially along a first straight line, and the second cutting portion extends substantially along a second straight line.

In an example, the first straight line and the second straight line form a first angle, and the first angle is greater than 10 degrees and less than 80 degrees.

In an example, the first blade further includes a transition portion, the transition portion is located between the first cutting portion and the second cutting portion, and the transition portion is substantially arc-shaped.

In an example, the start point of the first cutting portion is connected to the base, the end point of the first cutting portion is connected to the transition portion, and the first cutting portion extends outward in an inclined manner relative to the base in the direction from the start point to the end point.

In an example, the number of first blades is greater than or equal to three.

In an example, the first straight line and the second straight line form a first angle, and the first angle is greater than 20 degrees and less than 80 degrees.

In an example, the cutting assembly further includes a second blade, where one end of the second blade is connected to the base, and the second blade extends along a third straight line.

In an example, the second blade has a third cutting portion, the length of the third cutting portion along the direction of the third straight line is a third length L3, and the ratio of the difference between the first length L1 and the third length L3 to the third length L3 is less than or equal to 30%.

In an example, the number of first blades is six.

In an example, a second angle is formed between the first straight line and the rotation axis, and the second angle is greater than 10 degrees and less than 80 degrees.

A cutting assembly applicable to a blower/vacuum includes a base, a first blade, and a second blade. The base is rotatable about a rotation axis. The first blade is connected to the base, where the first blade is rotatable with the base about the rotation axis to implement a cutting function. The second blade is also rotatable with the base about the rotation axis to implement a cutting function. The geometric configuration of the second blade is not completely identical to the geometric configuration of the first blade.

The present application has the benefit below. During use, the electric motor drives the fan assembly to generate the airflow, and a heat dissipation path of the electric motor is as follows: the airflow enters from the heat dissipation port, passes through the control board and flows through the electric motor, and then flows out from the air blowing port. In a heat dissipation process, the airflow does not carry dust in the position where the electric motor is located to the control board, thereby preventing the control board from being contaminated by the dust.

### BRIEF DESCRIPTION OF DRAWINGS

FIG. 1 is structural view one of a blower/vacuum in an air blowing mode according to an example of the present application.
FIG. 2 is structural view two of a blower/vacuum in an air blowing mode according to the present application.
FIG. 3 is a sectional view of part of structures of a blower/vacuum according to the present application.
FIG. 4 is exploded view one of a blower/vacuum in an air blowing mode according to the present application.
FIG. 5 is an enlarged view of region A in FIG. 3.
FIG. 6 is a structural view showing a body housing and an auxiliary handle of a blower/vacuum according to the present application.
FIG. 7 is an exploded view showing a body housing and an auxiliary handle of a blower/vacuum according to the present application.
FIG. 8 is exploded view two of a blower/vacuum in an air blowing mode according to the present application.
FIG. 9 is exploded view three of a blower/vacuum in an air blowing mode according to the present application, where an air inlet cover is opened.
FIG. 10 is schematic view one showing part of structures of a blower/vacuum with an opened air inlet cover according to the present application.
FIG. 11 is a structural view of a first engaging hook of a blower/vacuum according to the present application.
FIG. 12 is exploded view three of a blower/vacuum in an air blowing mode according to the present application, where an air inlet cover is closed.
FIG. 13 is a schematic view showing part of structures of a blower/vacuum in an air blowing mode according to the present application.
FIG. 14 is an exploded view showing a body housing and an air blowing tube of a blower/vacuum according to the present application.
FIG. 15 is a structural view of a blower/vacuum in an air suction mode according to the present application.
FIG. 16 is an exploded view of a blower/vacuum in an air suction mode according to the present application.
FIG. 17 is schematic view two showing part of structures of a blower/vacuum with an opened air inlet cover according to the present application.
FIG. 18 is a schematic view showing part of structures of an air blowing tube according to the present application.
FIG. 19 is a structural view showing that an air blowing tube is mounted to a blower/vacuum in an air suction mode according to the present application.
FIG. 20 is a structural view showing that a connecting portion is mounted to a blower/vacuum in an air suction mode according to the present application.
FIG. 21 is a schematic view showing part of structures of a blower/vacuum in an air suction mode according to the present application.
FIG. 22 is a structural view showing that a conversion member is detached from a blower/vacuum in an air suction mode according to the present application.
FIG. 23 is a schematic view showing that part of structures of a blower/vacuum in an air suction mode during the detachment of a conversion member according to the present application.
FIG. 24 is a structural view showing that an air blowing tube is stored on a blower/vacuum in an air suction mode according to the present application.
FIG. 25 is structural view one of an electric motor, a fan assembly, and a cutting assembly according to the present application.
FIG. 26 is structural view two of an electric motor, a fan assembly, and a cutting assembly according to the present application.
FIG. 27 is an exploded view of an electric motor, a fan assembly, and a cutting assembly according to the present application.
FIG. 28 is a structural view of a body housing, a fan assembly, and a cutting assembly according to the present application.
FIG. 29 is a front view of a body housing, a fan assembly, and a cutting assembly according to the present application.
FIG. 30 is structural view one of a cutting assembly according to the present application.
FIG. 31 is structural view two of a cutting assembly according to the present application.
FIG. 32 is structural view three of a cutting assembly according to the present application.
FIG. 33 is structural view four of a cutting assembly according to the present application.
FIG. 34 is a front view of a cutting assembly according to the present application.
FIG. 35 is a schematic view of another example of a cutting assembly according to the present application.
FIG. 36 is a structural view of another example in an air blowing mode according to the present application.
FIG. 37 is a structural view of FIG. 36 from another angle.
FIG. 38 is a schematic diagram showing speed regulation control of a blower/vacuum according to the present application.

### Reference list

- 100: housing
- 101: air suction port
- 102: air blowing port
- 103: heat dissipation port
- 110: body housing
- 111: lining body
- 1111: limiting protrusion
- 112: first volute
- 113: second volute
- 1131: second mounting groove
- 114: hook
- 1141: second groove
- 115: first cavity housing
- 116: outer housing
- 120: connecting housing
- 121: battery pack coupling portion
- 200: electric motor
- 210: motor body
- 220: motor shaft
- 201: motor axis
- 300: control board
- 401: first straight line
- 402: second straight line
- 410: fan assembly
- 411: support plate
- 412: first fan blade
- 413: second fan blade
- 420: cutting assembly
- 421: base
- 422: first blade
- 4221: first cutting portion
- 4222: second cutting portion
- 4223: transition portion
- 4224: first cutting plane
- 423: second blade
- 4231: second cutting plane
- 4201: rotation axis
- 510: air blowing assembly
- 511: air blowing tube
- 520: air inlet cover
- 521: first handle
- 530: first assembly structure
- 531: first engaging protrusion
- 532: first engaging hook
- 540: identification component
- 541: Hall sensor
- 542: magnet
- 543: cover plate
- 550: second assembly structure
- 551: second engaging hook
- 560: ejection mechanism
- 561: ejection column
- 562: spring
- 610: main handle
- 611: holding region
- 620: main switch
- 621: first rotational speed instruction
- 630: speed regulation device
- 631: second rotational speed instruction
- 640: auxiliary handle
- 650: adjustment assembly
- 651: first connecting portion
- 652: second connecting portion
- 653: locking member
- 710: air suction assembly
- 711: air suction tube
- 7111: second handle
- 7112: second support shaft
- 7113: first protrusion
- 720: connecting portion
- 721: first support shaft
- 722: third engaging protrusion
- 723: elastic engaging hook
- 730: conversion member
- 731: collection port
- 732: first groove
- 733: operation handle
- 734: operation member
- 740: collection bag
- 800: battery pack
- 810: detachment device
- V1: first rotational speed
- V2: second rotational speed

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

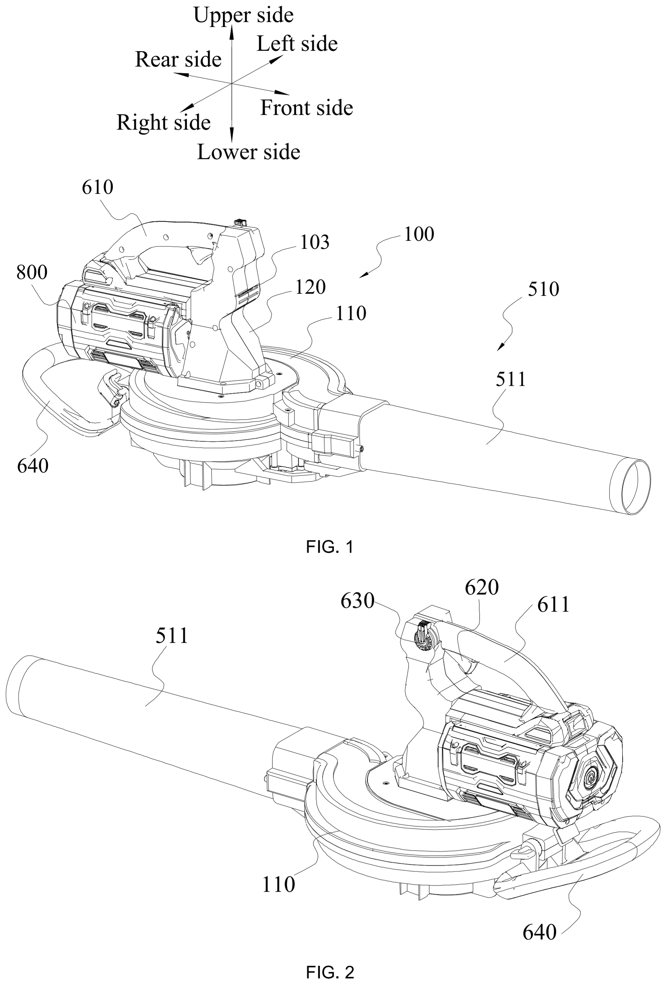

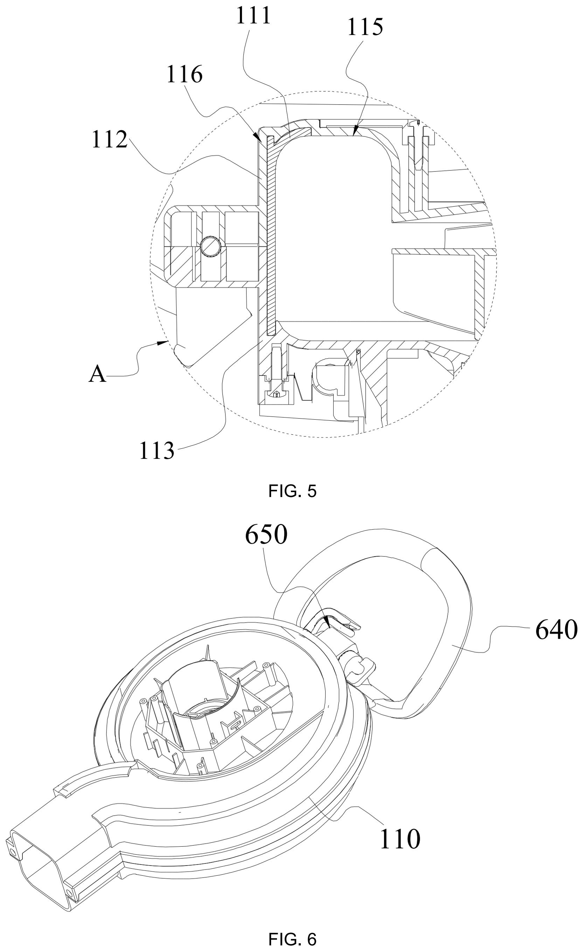

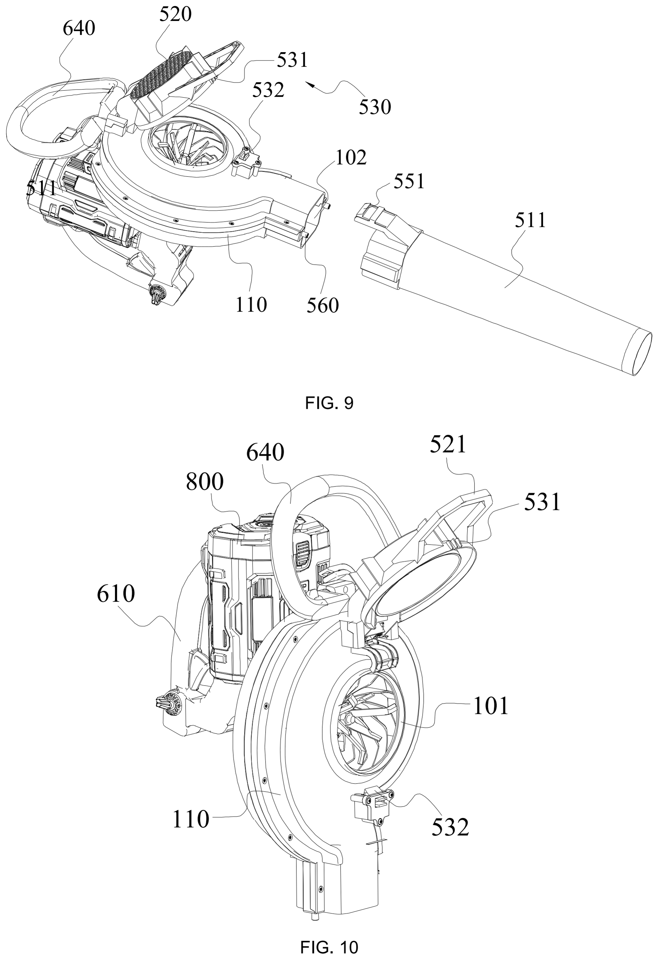

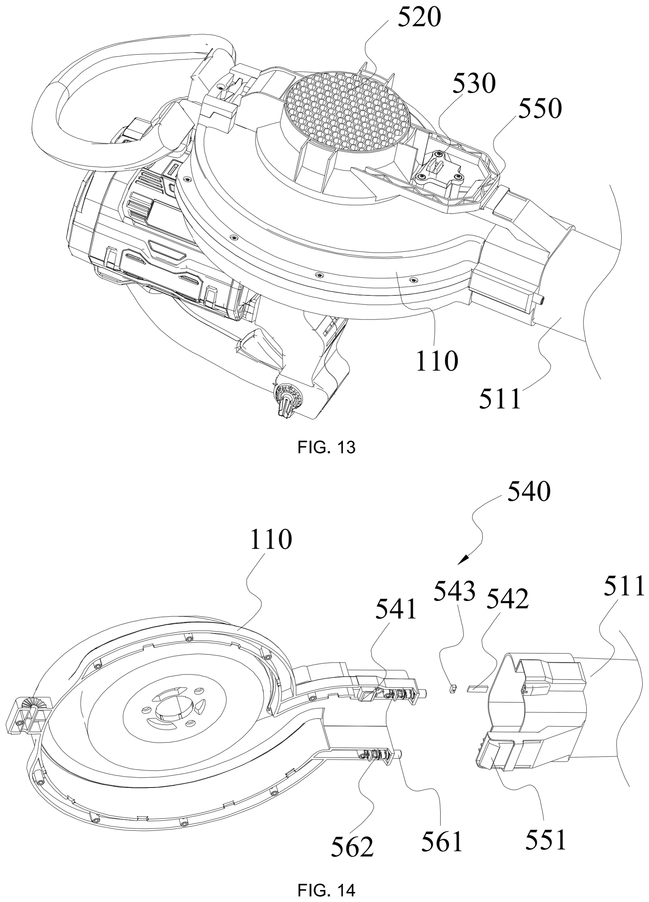

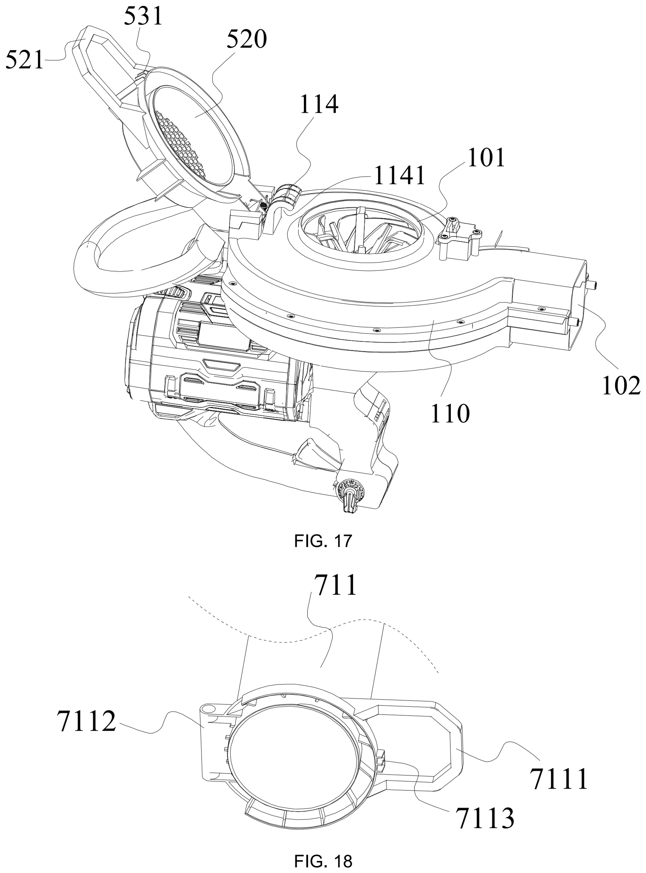

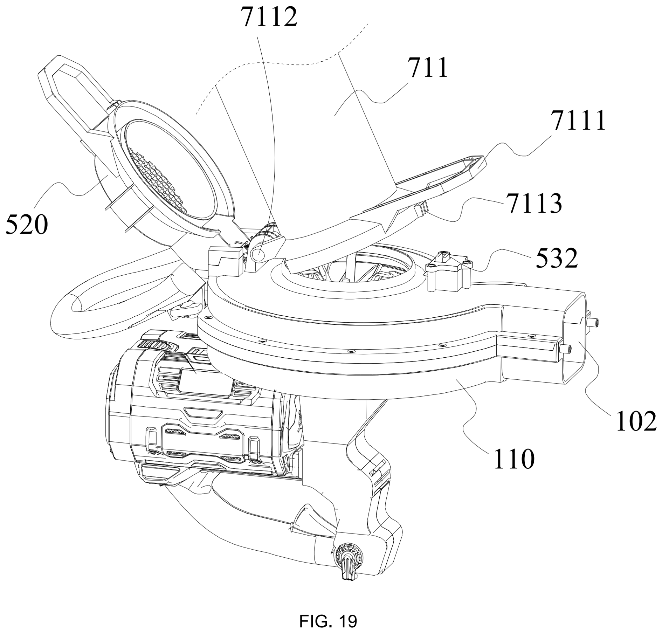

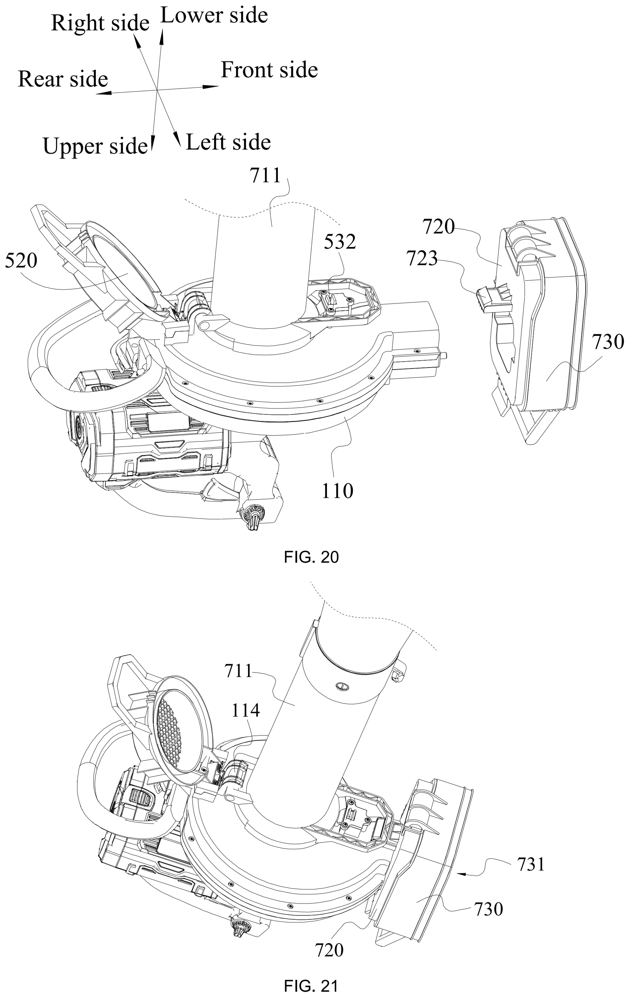

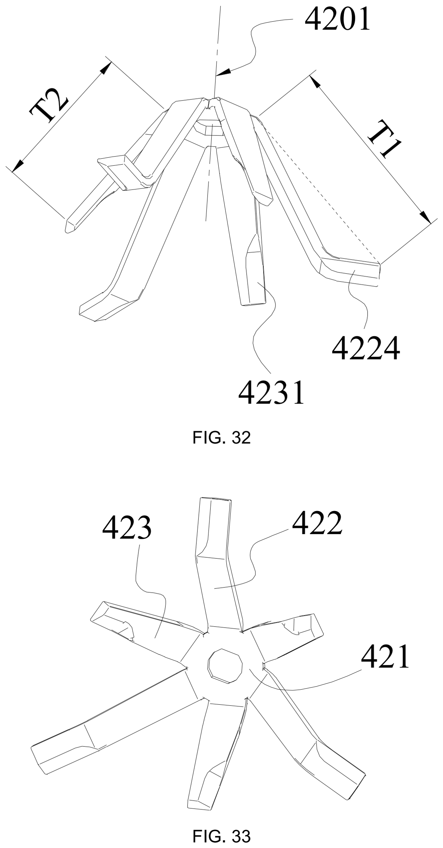

Referring to FIGS. 1 to 34, the present application provides a blower/vacuum, and the blower/vacuum has at least two working modes, that is, an air blowing mode and an air suction mode. The blower/vacuum may gather scattered leaves and other target objects by using the air blowing mode and may also suck the leaves into a specified garbage collection device by using the air suction mode, thereby achieving the purpose of cleaning. Therefore, the blower/vacuum can selectively work in the air blowing mode or the air suction mode according to an actual requirement of a user.

Referring to FIGS. 1 to 3, the blower/vacuum includes a housing 100, an electric motor 200, a control board 300, and a fan assembly 410. The electric motor 200 is disposed in the housing 100. The control board 300 is electrically connected to the electric motor 200. The fan assembly 410 is connected to the electric motor 200 and is driven by the electric motor 200 to generate an airflow. The housing 100 has an air suction port 101 and an air blowing port 102. The air suction port 101 is configured to correspond to the fan assembly 410. When the fan assembly 410 works, the airflow enters from the air suction port 101, passes the electric motor 200, and then flows out from the air blowing port 102 so that air blowing or air suction can be implemented and the airflow can simultaneously dissipate heat of the electric motor 200 in a flow process.

The blower/vacuum provided by the present application has the air suction port 101 that is provided on the lower side of the housing 100 and the air blowing port 102 that is provided on the front side of the housing 100. The blower/vacuum further includes an air blowing assembly 510. The air blowing assembly 510 includes an air blowing tube 511 for the airflow to flow through, and the air blowing tube 511 is detachably connected to the air blowing port 102. After the air blowing assembly 510 is mounted, the blower/vacuum may gather scattered leaves and other target objects by using the air blowing mode.

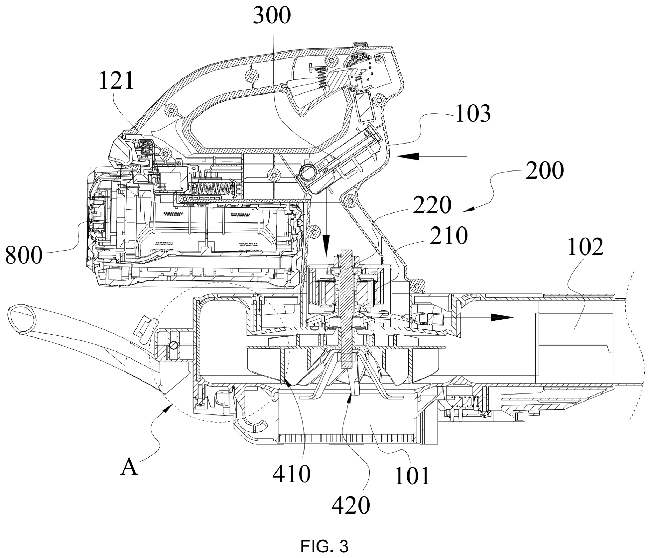

The housing 100 further has a heat dissipation port 103, and the electric motor 200 includes at least the following heat dissipation path: the airflow flows in from the heat dissipation port 103, sequentially passes through the control board 300 and the electric motor 200, and then flows out from the air blowing port 102. In a heat dissipation process, the airflow does not carry dust in the position where the electric motor 200 is located to the control board 300, thereby preventing the control board 300 from being contaminated by the dust. The arrows in FIG. 3 show the flow direction of the heat dissipation airflow.

Specifically, the control board 300 is disposed on a side of the electric motor 200 facing away from the fan assembly 410 so that the dust in the airflow sucked by the fan assembly 410 is prevented from contaminating the control board 300.

The minimum distance between the heat dissipation port 103 and the control board 300 is less than or equal to 5 cm so that the airflow entering from the heat dissipation port 103 can quickly reach the control board 300, achieving a good heat dissipation effect. In some examples, the minimum distance between the heat dissipation port 103 and the control board 300 is 4 cm. In some examples, the minimum distance between the heat dissipation port 103 and the control board 300 is 3 cm. In some examples, the minimum distance between the heat dissipation port 103 and the control board 300 is 2 cm.

The housing 100 includes a body housing 110 and a connecting housing 120 disposed on a side of the body housing 110. The electric motor 200 is disposed in the body housing 110, the control board 300 is disposed in the connecting housing 120, and the heat dissipation port 103 is provided on the connecting housing 120. To make the control board 300 far from the air suction port 101, the air suction port 101 is provided on a side of the body housing 110 facing away from the connecting housing 120. The air blowing port 102 is provided on the front side of the body housing 110.

The blower/vacuum further includes a main handle 610. The main handle 610 is provided on a side of the connecting housing 120 facing away from the body housing 110 to be held conveniently. The connecting housing 120 of the present application is disposed on the upper side of the body housing 110, and the main handle 610 is provided on the upper side of the connecting housing 120. Therefore, the heat dissipation port 103 is located above the electric motor 200, thereby further preventing the dust from contaminating the control board 300. A holding region 611 is formed on the main handle 610. The holding region 611 refers to a region on the main handle 610 that may be held by a hand of the user.

In this example, the control board 300 and the fan assembly 410 are located on two sides of a motor body 210, respectively. In other words, the control board 300 and the fan assembly 410 are located on two sides of laminations of the electric motor, respectively. The shape of the heat dissipation port 103 and the air inlet direction of the heat dissipation port 103 are not limited here and may be configured according to an actual need. In some examples, the air inlet direction of the heat dissipation port 103 is parallel to the air outlet direction of the air blowing port 102 so that air blown outside can be prevented from being sucked by the heat dissipation port 103 so that dust is prevented from being sucked.

Generally, blowers/vacuums include direct current blowers/vacuums and alternating current blowers/vacuums. The blower/vacuum powered by a battery pack 800 is a direct current blower/vacuum. In some examples, the electric motor 200 may be a brushless motor. The brushless motor is powered by the battery pack 800. The electric motor 200 has an upper side and a lower side and has only two heat dissipation air paths, which are a first heat dissipation air path and a second heat dissipation air path, respectively. In the first heat dissipation air path, the airflow flows through the electric motor 200 from the upper side of the electric motor 200, and in the second heat dissipation air path, the airflow flows through the electric motor 200 from the lower side of the electric motor 200.

In the first heat dissipation air path, the airflow flows through the electric motor 200 from the control board 300. In the heat dissipation process, the airflow does not carry the dust in the position where the electric motor 200 is located to the control board 300, thereby preventing the control board 300 from being contaminated by the dust. Specifically, in the first heat dissipation air path, the airflow enters from the heat dissipation port 103, sequentially passes through the control board 300 and the electric motor 200, and flows out from the air blowing port 102. In the second heat dissipation air path, the airflow enters from the air suction port 101, passes the electric motor 200, and flows out from the air blowing port 102.

The blower/vacuum further includes a battery pack coupling portion 121 for mounting the battery pack 800, and the electric motor 200 is powered by the battery pack 800. The battery pack coupling portion 121 is disposed on the connecting housing 120. Specifically, the heat dissipation port 103 is provided on the front side of the connecting housing 120, and the battery pack coupling portion 121 is disposed on the rear side of the connecting housing 120.

A main switch 620 is disposed on the lower side of the main handle 610 to facilitate power-on and power-off operations. A speed regulation device 630 is disposed at the joint between the connecting housing 120 and the main handle 610 to facilitate speed regulation. In this example, the main switch 620 is a trigger, and the speed regulation device 630 is a speed regulation knob. The main handle 610 is held by one hand, which can implement startup, shutdown, and the speed regulation.

In some examples, power of the electric motor 200 is greater than 1200 W. The electric motor 200 has relatively large power, improving working efficiency. The power of the electric motor 200 may be 1250 W, 1300 W, 1350 W, 1400 W, or 1450 W. The electric motor 200 may be the brushless motor.

In the air blowing mode, thrust of the blower/vacuum is greater than 14.5 N. The thrust may be 15 N, 15.5 N, 16 N, or 16.5 N. In an example, the thrust of the blower/vacuum is greater than 15.5 N.

In some other examples, the capacity of the battery pack 800 is greater than or equal to 6 AH, and the power of the electric motor 200 is greater than 1200 W. The battery pack 800 has a relatively long battery lifetime and the electric motor has the relatively large power, thereby improving the working efficiency. One or at least two battery packs 800 may be provided. The power and thrust of the blower/vacuum are set so that the blower/vacuum has a stronger capability of blowing objects in the air blowing mode and can also better achieve the air blowing performance when encountering a slightly heavy object such as gravel.

The maximum rotational speed of the electric motor is greater than or equal to 8000 rpm. In some examples, the maximum rotational speed of the electric motor may be 8250 rpm, 8500 rpm, 8750 rpm, or 9000 rpm.

The maximum air volume of the blower/vacuum is greater than or equal to 480 cfm. In some examples, the maximum air volume of the blower/vacuum may be 500 cfm, 520 cfm, 530 cfm, or 550 cfm.

The maximum wind speed of the blower/vacuum in the air blowing mode is greater than or equal to 100 mph. In some examples, the maximum wind speed of the blower/vacuum in the air blowing mode is about 110 mph, 120 mph, 125 mph, or 135 mph.

The rated voltage of the battery pack of the blower/vacuum is greater than or equal to 40 V. In some examples, the rated voltage of the battery pack is greater than or equal to 40 V and less than or equal to 60 V, such as 40 V, 48 V, or 56 V.

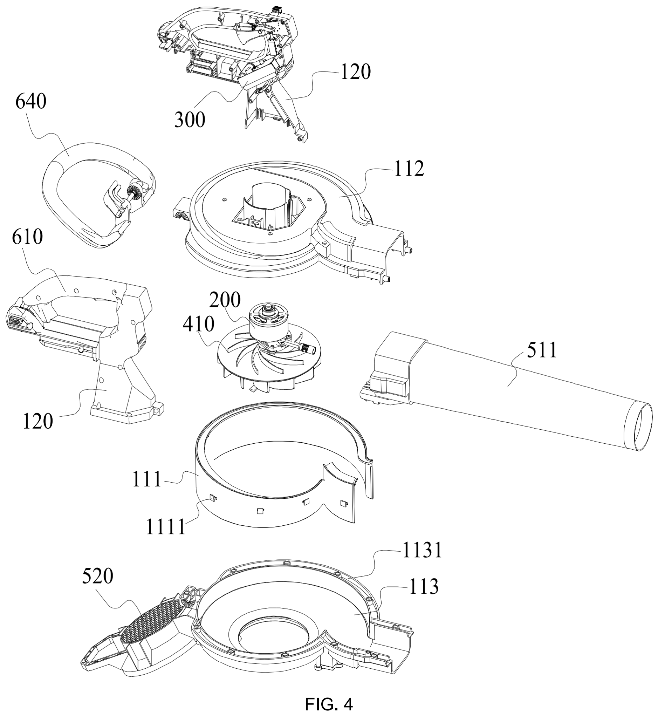

Referring to FIGS. 3 and 4, the blower/vacuum further includes a cutting assembly 420. The cutting assembly 420 is connected to the electric motor 200. Specifically, the electric motor 200 includes the motor body 210 and a motor shaft 220 connected to the motor body 210, and the cutting assembly 420 is disposed on the motor shaft 220. The fan assembly 410 and the cutting assembly 420 are each connected to the motor shaft 220, and the fan assembly 410 is located between the motor body 210 and the cutting assembly 420. In an example, the motor body 210 refers to the stator laminations of the electric motor 200.

For the body housing 110, an accommodating space is formed in the body housing 110, which can accommodate not only the electric motor 200 but also the cutting assembly 420 and the fan assembly 410. The air suction port 101 and the air blowing port 102 each communicate with the accommodating space. The blower/vacuum has the air blowing mode and the air suction mode. When the blower/vacuum is in the air suction mode, a sucked object enters the housing 100 from the air suction port 101 under the action of the airflow generated by the fan assembly 410 and is cut by the cutting assembly 420 and discharged from the air blowing port 102. Under the action of the cutting assembly 420, the sucked object is cut into small pieces or chopped. In a cutting process, the splashing sucked object generates a very large impact force on at least part of the body housing 110. If the impact resistance of the body housing 110 is poor, the body housing 110 will be deformed or damaged.

To improve the impact resistance performance, the material of the entire body housing 110 may be changed, or the material of part of the body housing 110 may be changed for a main impacted portion, so as to reduce the cost. Regarding the blower/vacuum provided by the present application, at least part of the body housing 110 forms a first cavity housing 115, the cutting assembly 420 is at least partially disposed in the first cavity housing 115, and the sucked object can pass the cutting assembly 420 and be discharged out of the first cavity housing 115.

The first cavity housing 115 includes an outer housing 116 and a lining body 111, and the outer housing 116 is disposed on the outer side of the lining body 111. In this example, the outer housing 116 is constituted by a first volute 112 and a second volute 113. In an example, the outer housing 116 may be constituted by only one of the first volute 112 or the second volute 113.

The outer housing 116 is made of a first material, and the lining body 111 is made of a second material. The impact resistance performance of the second material is greater than the impact resistance performance of the first material, that is, the impact strength of the second material is greater than the impact strength of the first material, and the impact strength of the second material is greater than or equal to 20 kJ/m2. In an example, the impact strength of the second material is greater than or equal to 25 kJ/m2. In an example, the impact strength of the second material is greater than or equal to 30 kJ/m2. In an example, the impact strength of the second material is greater than or equal to 35 kJ/m2. In an example, the impact strength of the second material is greater than or equal to 40 kJ/m2. In an example, the impact strength of the second material is greater than or equal to 45 kJ/m2. In some examples, the impact strength of the second material is about 50 kJ/m2, 55 kJ/m2, or 60 kJ/m2.

It is to be noted that ISO 180/1eA is used as a test standard for the impact strength here. The first cavity housing 115 is configured to have two layers. In addition, the inner layer has large impact strength and can resist the impact force generated on the lining body 111 by the splashing sucked object, reducing deformation and avoiding damage.

In the inner cavity of the first cavity housing 115, the lining body 111 may be disposed along the flow direction of the sucked object so that the lining body 111 is disposed in any position that contacts the sucked object to reduce the impact force of the sucked object on the outer housing 115. The shape of the lining body 111 is not limited here.

In some examples, the impact strength of the first material is greater than or equal to 5 kJ/m2 and less than or equal to 25 kJ/m2.

In some examples, the hardness of the first material is greater than the hardness of the second material so that the outer housing 115 protects the lining body 111 and prevents the lining body 111 from being damaged.

As described above, the first cavity housing 115 may be part of the body housing 110 or the entire body housing 110. In this example, at least part of the fan assembly 410 is accommodated in the first cavity housing 115. The body housing 110 has the air suction port 101 and the air blowing port 102. The air suction port 101 and the air blowing port 102 each communicate with the inner cavity of the first cavity housing 115. The cutting assembly 420 is disposed close to the air suction port 101.

To facilitate mounting of components in the body housing 110, the body housing 110 has a split structure. Specifically, the body housing 110 includes the first volute 112 and the second volute 113 which are configured to be snap-fitted with each other, and limiting protrusions 1111 are provided on the peripheral surface of the lining body 111 and are sandwiched between the first volute 112 and the second volute 113. After the first volute 112 and the second volute 113 are snap-fitted with each other, the lining body 111 is fixed by clamping the limiting protrusions 1111.

The first volute 112 and the second volute 113 may be locked through bolts. A first mounting groove is provided at the circumferential edge of the first volute 112, and a second mounting groove 1131 is provided at the circumferential edge of the second volute 113. When the first volute 112 and the second volute 113 are snap-fitted with each other, the first mounting groove and the second mounting groove 1131 are snap-fitted with each other to form a mounting space, and the limiting protrusions 1111 are sandwiched in the mounting space. Mounting holes for inserting the bolts are provided in the mounting space.

Referring to FIGS. 4 to 7, the blower/vacuum further includes an auxiliary handle 640, the auxiliary handle 640 is connected to the body housing 110, and an angle of the auxiliary handle 640 is adjustable. Specifically, the auxiliary handle 640 is disposed on the rear side of the body housing 110 and is connected to the body housing 110 through an adjustment assembly 650, and the angle of the auxiliary handle 640 can be adjusted through the adjustment assembly 650.

The adjustment assembly 650 includes a first connecting portion 651, a second connecting portion 652, and a locking member 653. The first connecting portion 651 is disposed on the body housing 110, the second connecting portion 652 is disposed on the auxiliary handle 640, and the locking member 653 can lock the first connecting portion 651 and the second connecting portion 652. The first connecting portion 651 includes multiple first connecting teeth, and the second connecting portion 652 includes multiple second connecting teeth. The first connecting teeth can mesh with the second connecting teeth, and the same first connecting tooth can selectively mesh with different second connecting teeth to change the angle of the auxiliary handle 640. The locking member 653 is inserted through the first connecting portion 651 and the second connecting portion 652 and can be threadedly connected to the second connecting portion 652. The multiple first connecting teeth are spaced in the circumferential direction of the locking member 653, and the multiple second connecting teeth are spaced in the circumferential direction of the locking member 653.

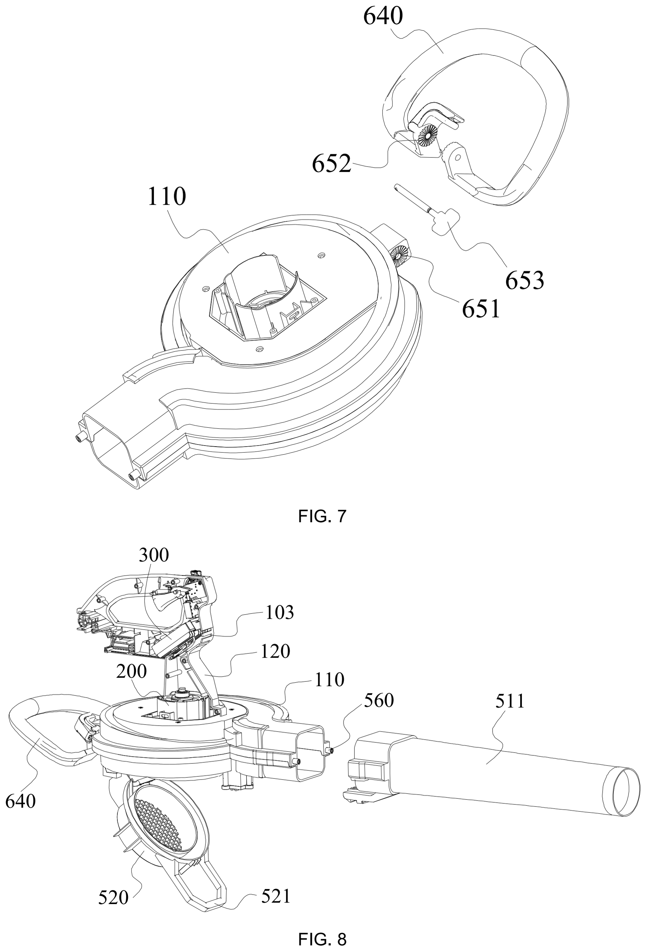

Referring to FIGS. 8 to 14, the blower/vacuum further includes an air inlet cover 520, and the air inlet cover 520 is disposed at the air suction port 101 in an openable and closable manner. The air blowing tube 511 of the air blowing assembly 510 is detachably disposed at the air blowing port 102. The blower/vacuum has the air blowing mode and the air suction mode. When the blower/vacuum is in the air blowing mode, the air inlet cover 520 is closed, and the airflow passes through the air inlet cover 520, enters the air suction port 101 to reach the electric motor 200, and then passes through the air blowing port 102 and flows out of the air blowing tube 511. Since the air suction port 101 and the air blowing port 102 are each provided on the body housing 110, the air inlet cover 520 and the air blowing tube 511 are each connected to the body housing 110.

The blower/vacuum further includes a first assembly structure 530. When the first assembly structure 530 is in an assembled state, the air inlet cover 520 remains in a closed state, and in the closed state, the airflow can pass through the air inlet cover 520 and enter the air suction port 101. When the first assembly structure 530 is in a non-assembled state, the air inlet cover 520 can be opened. In this case, an air suction assembly 710 may be mounted at the air suction port 101, which is described in detail below.

The first assembly structure 530 includes a first fitting portion and a second fitting portion. One of the air inlet cover 520 and the body housing 110 is provided with the first fitting portion, and the other of the air inlet cover 520 and the body housing 110 is provided with the second fitting portion. The first fitting portion and the second fitting portion fit each other to lock the air inlet cover 520 and the body housing 110. In some examples, the first assembly structure 530 may be a magnetic attraction assembly.

In this example, one end of the air inlet cover 520 is rotatably connected to the body housing 110, and the other end of the air inlet cover 520 is selectively engaged with the body housing 110. Even if the air inlet cover 520 is opened, it will not fall off.

In this example, the first assembly structure 530 is a snap assembly. The first engaging portion includes a first engaging protrusion 531, the second engaging portion includes a first engaging hook 532, and the first engaging protrusion 531 can be engaged with the first engaging hook 532. Specifically, the first engaging protrusion 531 is disposed on the air inlet cover 520, and the first engaging hook 532 is disposed on the body housing 110 and elastically connected to the body housing 110. In the process in which the air inlet cover 520 is closed, the first engaging protrusion 531 presses down from one side of the first engaging hook 532 to compress the first engaging hook 532 so that the first engaging hook 532 is retracted. With continued closure of the air inlet cover 520, the first engaging protrusion 531 is moved to the other side of the first engaging hook 532, and the first engaging hook 532 extends out to limit the first engaging protrusion 531. When the air inlet cover 520 needs to be opened, the first engaging hook 532 is pressed so that the first engaging hook 532 can be retracted. Thus, the first engaging protrusion 531 is released from the limitation of the first engaging hook 532, and the air inlet cover 520 can be opened by rotating the air inlet cover 520.

The blower/vacuum further includes an identification component 540 configured to identify the position of the air blowing tube 511. The air blowing tube 511 may be in a mounted position or an unmounted position. When the first assembly structure 530 is in the assembled state, the air blowing tube 511 can be mounted to the mounted position. When the air blowing tube 511 is in the mounted position, the airflow can flow out through the air blowing tube 511. When the first assembly structure 530 is in the non-assembled state, the air blowing tube 511 cannot be mounted to the mounted position. Only after the air inlet cover 520 is closed can the air blowing tube 511 be properly mounted to the body housing 110. Such a configuration can avoid the case where the air inlet cover 520 is not closed after the air blowing tube 511 is mounted and the blower/vacuum is started, thereby avoiding safety hazards caused by exposure of the cutting assembly 420.

The control board 300 has a startup circuit for controlling the blower/vacuum to start or shut down. The startup circuit is in an non-conducting state and the blower/vacuum is in a shutdown state when the air blowing tube 511 is in the unmounted position, and the startup circuit is in an conducting state and the blower/vacuum is in a ready-to-start state when the air blowing tube 511 is in the mounted position. The control board 300 can receive a signal from the identification component 540 and control the state of the startup circuit according to the signal. When the air blowing tube 511 is in the unmounted position, the blower/vacuum is in the shutdown state and cannot be started. An existing circuit board may be used as the control board 300, and circuits on the circuit board may be configured according to an actual need.

The identification component 540 is a contact switch or a non-contact switch. The non-contact switch is one or more of a photoelectric switch, a pressure switch, and a Hall switch. The contact switch may be a micro switch. When two or more types of non-contact switches are used, it is determined that the air blowing tube 511 is in the mounted position only when each switch detects that the air blowing tube 511 is in the mounted position, thereby increasing detection accuracy and avoiding a detection error caused by a failure of one type of switch.

In this example, the identification component 540 is the Hall switch. The Hall switch includes a Hall sensor 541 and a magnet 542. The Hall sensor 541 is disposed on the body housing 110, the magnet 542 is disposed on the air blowing tube 511, and the Hall sensor 541 can sense the magnet 542. When the air blowing tube 511 is in the mounted position, the Hall sensor 541 senses the magnet 542 and then sends out a first signal. When the air blowing tube 511 is in the unmounted position, the Hall sensor 541 cannot sense the magnet 542 and then sends out a second signal. The working principle of the Hall switch is the existing art, and the details are not repeated here.

The air blowing tube 511 is provided with a mounting space. The magnet 542 is located in the mounting space, and the mounting space is closed through a cover plate 543 so that the magnet 542 is prevented from falling off. The cover plate 543 and the air blowing tube 511 may be connected to or engaged with each other through screws.

The blower/vacuum further includes a second assembly structure 550 for connecting the air blowing tube 511 to the air inlet cover 520. When the air blowing tube 511 is in the mounted position, the air blowing tube 511 is sleeved on the body housing 110, and the second assembly structure 550 is in an assembled state to lock the air blowing tube 511 and the air inlet cover 520. The second assembly structure 550 can be in the assembled state only when the air inlet cover 520 is in the closed state, and otherwise, the air blowing tube 511 cannot be fixed. The preceding configuration imposes a further limitation: only after the air inlet cover 520 is closed can the air blowing tube 511 be mounted, thereby ensuring the use safety.

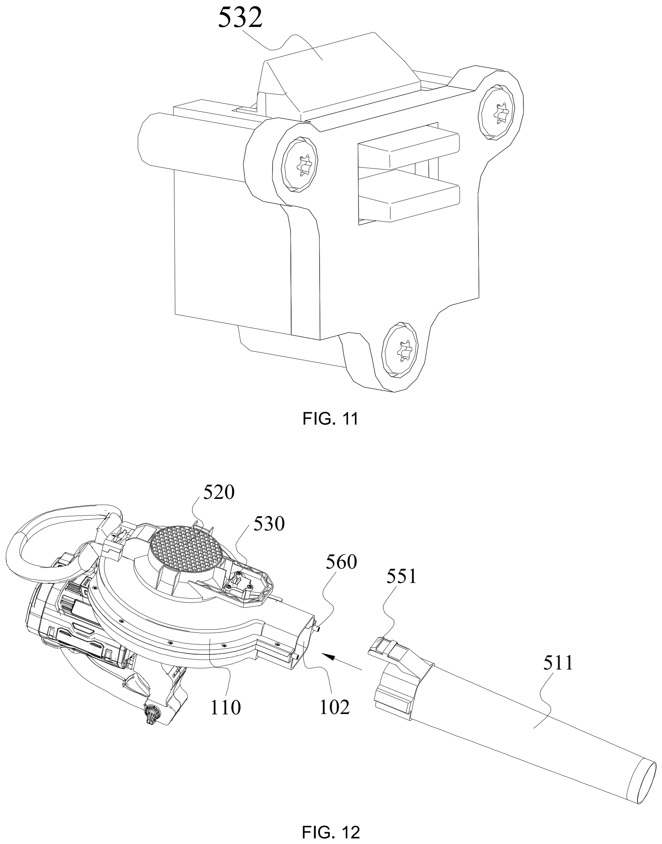

An extension portion is formed in the position of the air blowing port 102 on the body housing 110, so as to facilitate the mounting of the air blowing tube 511. In the process where the air blowing tube 511 is mounted, the air blowing tube 511 is sleeved on the extension portion. In the process where the air blowing tube 511 is sleeved, the air blowing tube 511 is connected to the air inlet cover 520 through the second assembly structure 550. The air blowing tube 511 is mounted along the direction indicated by the arrow in FIG. 12.

The second assembly structure 550 includes a second engaging protrusion and a second engaging hook 551. One of the air inlet cover 520 and the air blowing tube 511 is provided with the second engaging protrusion, and the other of the air inlet cover 520 and the air blowing tube 511 is provided with the second engaging hook 551. The second engaging protrusion and the second engaging hook 551 can be engaged with each other. Specifically, the second engaging protrusion is disposed on the air inlet cover 520, and the second engaging hook 551 is disposed on the air blowing tube 511 and elastically connected to the air blowing tube 511. In the process where the air blowing tube 511 is sleeved on the body housing 110, the second engaging protrusion presses down from one side of the second engaging hook 551 to compress the second engaging hook 551 so that the second engaging hook 551 is retracted. With continued sleeving, the second engaging protrusion is moved to the other side of the second engaging hook 551, and the second engaging hook 551 extends out to limit the second engaging protrusion. When the air blowing tube 511 needs to be detached, the second engaging hook 551 is pressed so that the second engaging hook 551 can be retracted. Thus, the second engaging protrusion is released from the limitation of the second engaging hook 551, and the air blowing tube 511 can be detached by pulling the air blowing tube 511.

A first handle 521 is provided on the air inlet cover 520 so that it is convenient to open and close the air inlet cover 520. An edge of the first handle 521 forms the second engaging protrusion so that the number of parts is reduced.

The blower/vacuum further includes an ejection mechanism 560. The ejection mechanism 560 is disposed on the body housing 110. When the air blowing tube 511 is separated from the body housing 110, the ejection mechanism 560 applies thrust to the air blowing tube 511 along a separation direction so that quick detachment of the air blowing tube 511 is facilitated.

In this example, the ejection mechanism 560 includes an ejection column 561 and a spring 562. The ejection column 561 is slidably connected to the body housing 110. One end of the spring 562 abuts against the ejection column 561, the other end of the spring 562 abuts against the body housing 110, and the spring 562 is compressed when the air blowing tube 511 is in the mounted position. When the air blowing tube 511 is detached, the second engaging hook 551 is pressed so that the second engaging hook 551 is retracted. Thus, the second engaging protrusion is released from the limitation of the second engaging hook 551. Under the action of the elasticity of the spring 562, the air blowing tube 511 is ejected outward so that the air blowing tube 511 can be detached conveniently and effortlessly.

In this example, two groups of ejection columns 561 and springs 562 are provided. The ejection columns 561 and the springs 562 are located on the left and right sides of the air blowing port 102 of the body housings 110, respectively, so as to ensure force balance.

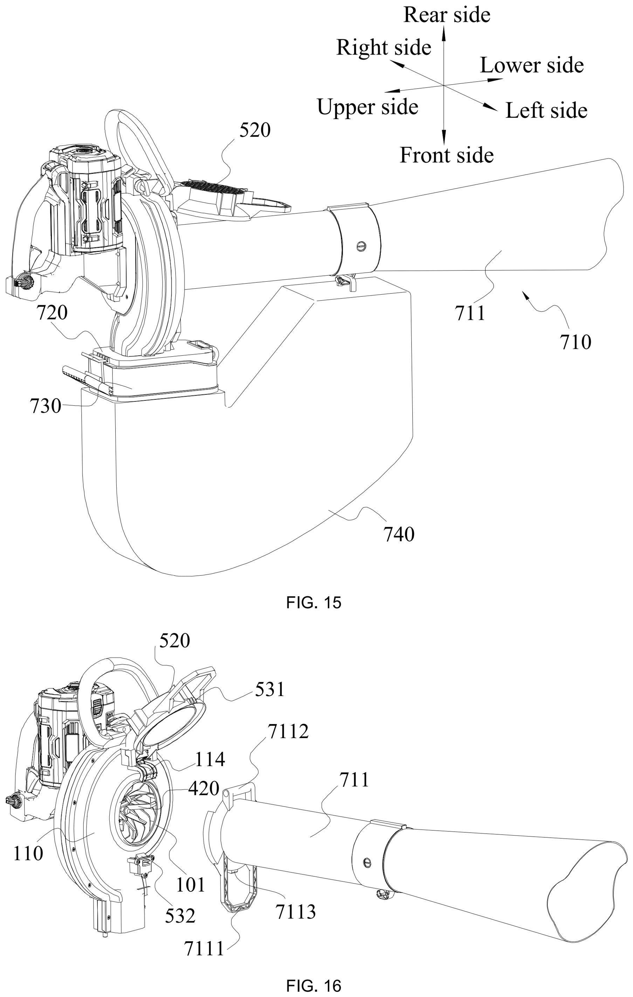

Referring to FIGS. 15 to 23, the blower/vacuum further includes the air suction assembly 710. The air suction assembly 710 includes an air suction tube 711, and the air suction tube 711 is detachably disposed at the air suction port 101. The blower/vacuum further includes a connecting portion 720 and a conversion member 730. The connecting portion 720 is detachably disposed at the air blowing port 102. When the conversion member 730 is assembled with the connecting portion 720, the conversion member 730 can be used for mounting a collection bag 740. The collection bag 740 is used for storing the object sucked by the air suction tube 711. The conversion member 730 has a collection port 731 to collect the sucked object. The area of the collection port 731 is greater than or equal to 250 square centimeters. In some examples, the area of the collection port 731 is greater than or equal to 300 square centimeters. In some examples, the area of the collection port 731 is greater than or equal to 350 square centimeters. In an example, the area of the collection port 731 is about 375 square centimeters.

The blower/vacuum has the air blowing mode and the air suction mode. When the blower/vacuum is in the air suction mode, the sucked object is sucked from the air suction tube 711, passes the air suction port 101 and reaches the cutting assembly 420 to be cut, and then passes the conversion member 730 and enters the collection bag 740 from the air blowing port 102. Since the conversion member 730 has the collection port 731 to collect the sucked object and the area of the collection port 731 is relatively large, the sucked object is poured conveniently after the collection is completed. In addition, the collection port 731 in this example is substantially rectangular and can have a larger collection area than a circular or elliptical collection port.

The conversion member 730 fits the connecting portion 720, causing the collection bag 740 to communicate with the air blowing port 102 so that the sucked object enters the collection bag 740 conveniently. When the collection bag 740 is detached, only the conversion member 730 needs to be detached. The design such as a band or a zipper is not adopted, it is easy to detach and mount the collection bag 740, and the situations such as damage to the zipper do not need to be considered.

One side of the connecting portion 720 is rotatably connected to the conversion member 730, and the other side of the connecting portion 720 and the conversion member 730 are locked to or released from each other through a first fitting structure. When the connecting portion 720 and the conversion member 730 are in the state of being rotatably connected to each other, the first fitting structure can be switched between a locked state and a released state. When the conversion member 730 is mounted, one side of the conversion member 730 is rotatably connected to the connecting portion 720, and then the conversion member 730 and the connecting portion 720 are locked to each other through the first fitting structure. When the conversion member 730 is detached, the first fitting structure is switched from the locked state to the released state so that one side of the conversion member 730 is separated from the connecting portion 720, and the side of the conversion member 730 rotatably connected to the connecting portion 720 is very easy to detach. Thus, the conversion member 730 is quickly detached, that is, the collection bag 740 can be quickly detached.

The first fitting structure can be switched between the locked state and the released state through one hand. Specifically, an operation handle 733 is disposed on the conversion member 730, and when a palm holds the operation handle 733, an operation portion of the first fitting structure is within an operable range of the fingers of the same palm, a finger for operating the operation portion may be any one of the five fingers, and the first fitting structure is switched from the locked state to the released state by operating the operation portion. When the conversion member 730 is mounted, the palm holds the operation handle 733 so that the conversion member 730 is rotatably connected to the connecting portion 720. In addition, the operation portion of the first fitting structure is within the operable range of the fingers of the same palm, the finger for operating the operation portion may be any one of the five fingers, and the first fitting structure is switched from the released state to the locked state by operating the operation portion.

The connecting portion 720 is rotatably connected to and fits the conversion member 730. One of the connecting portion 720 and the conversion member 730 is provided with a first support shaft 721, and the other of the connecting portion 720 and the conversion member 730 is provided with a first groove 732. The first support shaft 721 is insertable into the first groove 732, and the conversion member 730 is rotatable about the axis of the first support shaft 721. When the conversion member 730 is mounted, the palm holds the operation handle 733 and inserts the first support shaft 721 into the first groove 732, and the first fitting structure can be switched to the locked state by rotating the conversion member 730 and operating the operation portion. In some examples, the first fitting structure may be a magnetic attraction assembly.

The force application direction in which the user operates the first fitting structure to switch the first fitting structure from the locked state to the released state is the same as the direction in which the conversion member 730 moves away from the body housing 110. Therefore, the conversion member 730 can be detached through one action, and the detachment is quick and effortless.

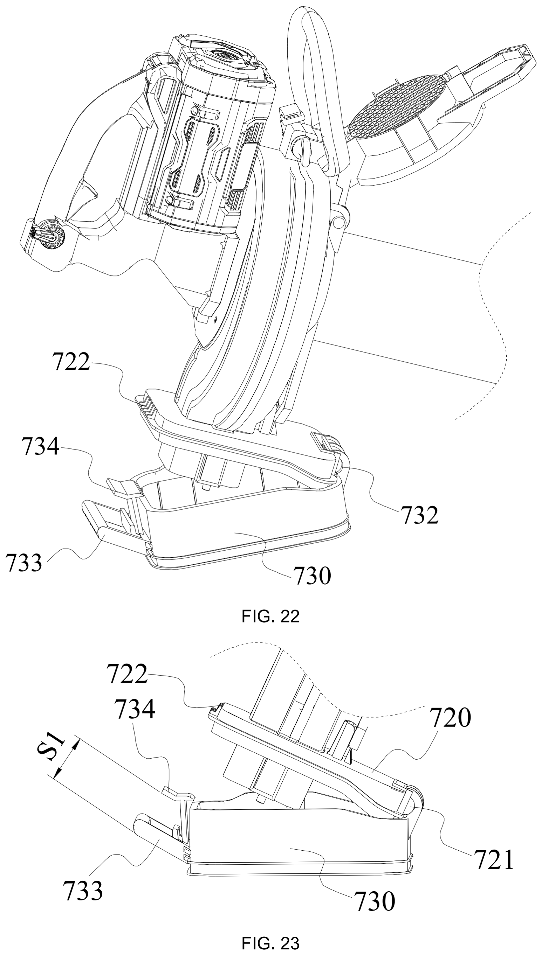

The operation handle 733 for the user to operate is disposed on the conversion member 730, and the minimum distance between the first fitting structure and the operation handle 733 is less than or equal to 10 cm. The user holds the operation handle 733 and applies a force to the first fitting structure so that the first fitting structure can be switched from the locked state to the released state and the conversion member 730 can be rotated around the connecting portion 720. The user may use a thumb to operate the first fitting structure and use the remaining four fingers to hold the operation handle 733 so that one hand can unlock and rotate the adapter to be open. The operation is smooth and effortless without jamming. In FIG. 23, the minimum distance between the first fitting structure and the operation handle 733 is represented by S1.

In some examples, the minimum distance between the first fitting structure and the operation handle 733 is less than or equal to 8 cm. In some examples, the minimum distance between the first fitting structure and the operation handle 733 is less than or equal to 7 cm. In some examples, the minimum distance between the first fitting structure and the operation handle 733 is less than or equal to 6 cm. In some examples, the minimum distance between the first fitting structure and the operation handle 733 is less than or equal to 5 cm.

In this example, the first fitting structure includes a third engaging protrusion 722 and an operation member 734. The third engaging protrusion 722 is disposed on the connecting portion 720. The operation member 734 is disposed on the conversion member 730. The operation member can be engaged with the third engaging protrusion 722 to be in the locked state, and the first fitting structure can be switched from the locked state to the released state by pressing the operation member 734. In a mounting process, the connecting portion 720 is inserted into the conversion member 730, the conversion member 730 is rotated so that the operation member 734 approaches the third engaging protrusion 722, the operation member 734 is pressed so that the operation member 734 avoids the third engaging protrusion 722 and the third engaging protrusion 722 moves from one side of the operation member 734 to the other side of the operation member 734 conveniently, and the operation member 734 is released so that the operation member 734 is engaged into the third engaging protrusion 722 to limit the third engaging protrusion 722. In a detachment process, one hand holds the operation handle 733 and simultaneously presses the operation member 734 to separate the operation member 734 from the third engaging protrusion 722, and the operation member 734 is moved away from the third engaging protrusion 722 by rotating the conversion member 730.

In this example, the operation member 734 is an elastic snap, and the operation portion is formed on the operation member 734 so that it is convenient to press the operation member 734.

Regarding the mounting of the air suction tube 711 to the body housing 110, only after the air inlet cover 520 is opened can the air suction tube 711 be mounted at the air suction port 101. One side of the air suction tube 711 is inserted into the body housing 110, and the other side of the air suction tube 711 is locked to or released from the body housing 110 through a second fitting structure. When the air suction tube 711 and the body housing 110 are in an inserted state, the second fitting structure can be switched between a locked state and a released state. When the air suction tube 711 is mounted, one side of the air suction tube 711 is inserted into the body housing 110, and then the air suction tube 711 and the body housing 110 are locked to each other through the second fitting structure. When the air suction tube 711 is detached, the second fitting structure is switched from the locked state to the released state so that the side of the air suction tube 711 is separated from the body housing 110. The side of the air suction tube 711 inserted into the body housing 110 is very easy to detach so that the air suction tube 711 is quickly detached.

The air suction tube 711 is inserted into and fits the body housing 110, where one of the air suction tube 711 and the body housing 110 is provided with a second support shaft 7112, the other of the air suction tube 711 and the body housing 110 is provided with a second groove 1141, the second support shaft 7112 is insertable into the second groove 1141, and the air suction tube 711 is rotatable about the axis of the second support shaft 7112. In this example, the second groove 1141 is provided on the body housing 110. Specifically, a hook 114 is disposed on the body housing 110, and the hook 114 encloses and forms the second groove 1141. The hook 114 is disposed on the inner side of the air inlet cover 520. Only after the air inlet cover 520 is opened can the hook 114 be exposed and the air suction tube 711 be mounted at the air suction port 101.

When the air suction tube 711 is mounted, the palm holds a second handle 7111 on the air suction tube 711 so that the second support shaft 7112 is inserted into the second groove 1141, and the second fitting structure can be switched to the locked state by rotating the air suction tube 711. In some examples, the second fitting structure may be a magnetic attraction assembly.

In this example, the second fitting structure includes a first protrusion 7113. The first protrusion 7113 is disposed on the air suction tube 711, and the first engaging hook 532 is disposed on and elastically connected to the body housing 110. In the process in which the air suction tube 711 is mounted, the first protrusion 7113 presses down from one side of the first engaging hook 532 to compress the first engaging hook 532 so that the first engaging hook 532 is retracted. With continued rotation of the air suction tube 711, the first protrusion 7113 is moved to the other side of the first engaging hook 532, and the first engaging hook 532 extends out to limit the first engaging protrusion 531. The first engaging hook 532 disposed on the body housing 110 may lock the air inlet cover 520 or the air suction tube 711, thereby reducing the number of parts.

The preceding identification component 540 is configured to identify the position of the air blowing tube 511. In the air suction mode, the air blowing tube 511 is not used at the air blowing port 102, but the collection bag 740 is mounted at the air blowing port 102. The identification component 540 is configured to identify the position of the connecting portion 720. The connecting portion 720 may be in a mounted position or an unmounted position. When the air suction tube 711 is in an assembled state, the connecting portion 720 can be mounted to the mounted position. In the mounted position, the adapter can fit the connecting portion 720. Only after the air suction tube 711 is mounted can the connecting portion 720 and the conversion member 730 be mounted, which can avoid the case where the air suction tube 711 is not mounted after the collection bag 740 is mounted and the blower/vacuum is started, thereby avoiding the safety hazards caused by the exposure of the cutting assembly 420.

The control board 300 has the startup circuit for controlling the blower/vacuum to start or shut down. The startup circuit is in the non-conducting state and the blower/vacuum is in the shutdown state when the connecting portion 720 is in the unmounted position, and the startup circuit is in the conducting state and the blower/vacuum is in the ready-to-start state when the connecting portion 720 is in the mounted position. The control board 300 can receive the signal from the identification component 540 and control the state of the startup circuit according to the signal. When the connecting portion 720 is in the unmounted position, the blower/vacuum is in the shutdown state and cannot be started. The existing circuit board may be used as the control board 300, and the circuits on the circuit board may be configured according to the actual need.

In this example, the identification component 540 is the Hall switch. The Hall switch includes the Hall sensor 541 and the magnet 542. The Hall sensor 541 is disposed on the body housing 110, the magnet 542 is disposed on the connecting portion 720, and the Hall sensor 541 can sense the magnet 542. When the connecting portion 720 is in the mounted position, the Hall sensor 541 senses the magnet 542 and then sends out the first signal. When the connecting portion 720 is in the unmounted position, the Hall sensor 541 cannot sense the magnet 542 and then sends out the second signal. The working principle of the Hall switch is the existing art, and the details are not repeated here.

It can be seen from the preceding description that whether the connecting portion 720 is in the mounted position or the air blowing tube 511 is in the mounted position, the Hall switch can be triggered so that the startup circuit is in the conducting state and the blower/vacuum is in the ready-to-start state.

Regarding the mounting of the air suction tube 711 to the connecting portion 720, the extension portion is formed in the position of the air blowing port 102 on the body housing 110, and the connecting portion 720 is sleeved on the extension portion and is engaged with the air suction tube 711. One of the air suction tube 711 and the connecting portion 720 is provided with a second protrusion, the other of the air suction tube 711 and the connecting portion 720 is provided with an elastic engaging hook 723, and the second protrusion can be engaged with the elastic engaging hook 723. Specifically, the second protrusion is disposed on the air suction tube 711, and the elastic engaging hook 723 is disposed on the connecting portion 720. In the process where the connecting portion 720 is sleeved on the body housing 110, the second protrusion presses down from one side of the elastic engaging hook 723 to compress the elastic engaging hook 723 so that the elastic engaging hook 723 is retracted. With continued sleeving, the second protrusion is moved to the other side of the elastic engaging hook 723, and the elastic engaging hook 723 extends out to limit the second protrusion. When the connecting portion 720 needs to be detached, the elastic engaging hook 723 is pressed so that the elastic engaging hook 723 can be retracted. Thus, the second protrusion is released from the limitation of the elastic engaging hook 723, and the connecting portion 720 can be detached by pulling the connecting portion 720.

The second handle 7111 is disposed on the air suction tube 711 so that it is convenient to mount and detach the air suction tube 711. An edge of the second handle 7111 forms the second protrusion so that the number of parts is reduced.

The air blowing tube 511 and the air suction tube 711 mentioned above may have the same structure, that is, one air tube has two use modes. Alternatively, the air blowing tube 511 and the air suction tube 711 mentioned above may have different structures, that is, two air tubes are provided. In this example, the air blowing tube 511 and the air suction tube 711 have the different structures, and the cross-sectional area of the air blowing tube 511 gradually decreases along the flow direction of the airflow so that the air outlet speed and pressure are increased. A bell mouth is provided at one end of the air suction tube 711 facing away from the air suction port 101 to increase the air suction area.

The blower/vacuum has a lot of accessories, including the air blowing tube 511, the air suction tube 711, and the collection bag 740. In different use conditions, different accessories need to be used. Therefore, the accessories are easily lost because the accessories are not used for a long time.

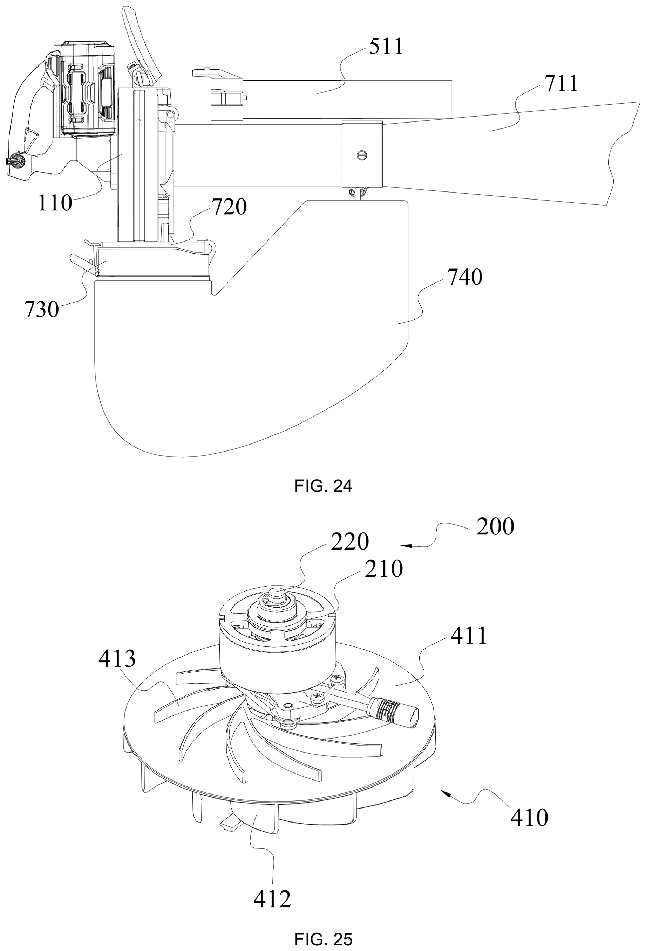

Referring to FIGS. 15 and 24, a hanger is provided on the air suction tube 711 so that it is convenient to hook the collection bag 740. Thus, the collection bag 740 is hung, thereby occupying a small space and facilitating the operation. Referring to FIG. 24, when the air blowing tube 511 and the air suction tube 711 are the two air tubes independent of each other, to facilitate storage, the air blowing tube 511 and the air suction tube 711 are detachably connected to each other. Specifically, the air blowing tube 511 and the air suction tube 711 may be engaged with or magnetically connected to each other. When the air suction tube 711 is used, the air blowing tube 511 is mounted on the air suction tube 711 to reduce an occupied space. In this case, the air blowing tube 511 does not play a functional role and is only stored on the air suction tube 711.

Referring to FIGS. 25 to 29, the fan assembly 410 can not only form the airflow for air suction but also dissipate the heat of the electric motor 200. In an example, the fan assembly 410 includes a centrifugal fan, which has a relatively large suction force and improves working efficiency. The electric motor 200 has a motor axis 201. The axis of the fan assembly 410 and the rotation axis 4201 of the cutting assembly 420 are each coincident with the motor axis.

The fan assembly 410 includes a support plate 411, first fan blades 412 disposed on one side of the support plate 411, and second fan blades 413 disposed on the other side of the support plate 411. The first fan blades 412 are located on the side of the support plate 411 facing away from the electric motor 200, and the second fan blades 413 are located on the side of the support plate 411 facing the electric motor 200. When the fan assembly 410 rotates, the first fan blades 412 are mainly used for sucking air, and the second fan blades 413 are mainly used for dissipating the heat of the electric motor 200.

The first fan blades 412 extend along curves. One end of each of the first fan blades 412 is disposed in the middle of the support plate 411, the other end of each of the first fan blades 412 extends to the edge of the support plate 411, and the diameter of each of the first fan blades 412 is equal to the diameter of the support plate 411. The diameter of each of the first fan blades 412 is greater than or equal to 180 cm, and the first fan blades 412 have a larger suction force. In an example, the diameter of each of the first fan blades 412 is greater than or equal to 185 cm. In another example, the diameter of the support plate 411 is greater than or equal to 190 cm.

The diameter of each of the second fan blades 413 is smaller than the diameter of the support plate 411. The ratio of the diameter of each of the second fan blades 413 to the diameter of each of the first fan blades 412 is between 0.7 and 0.9. In an example, the ratio of the diameter of each of the second fan blades 413 to the diameter of each of the first fan blades 412 is 0.8. The ratio of the height of each of the first fan blades 412 along a direction perpendicular to the support plate 411 to the height of each of the second fan blades 413 along the direction perpendicular to the support plate 411 is between 0.2 and 0.3. In an example, the ratio of the height of each of the first fan blades 412 along the direction perpendicular to the support plate 411 to the height of each of the second fan blades 413 along the direction perpendicular to the support plate 411 is 0.25.

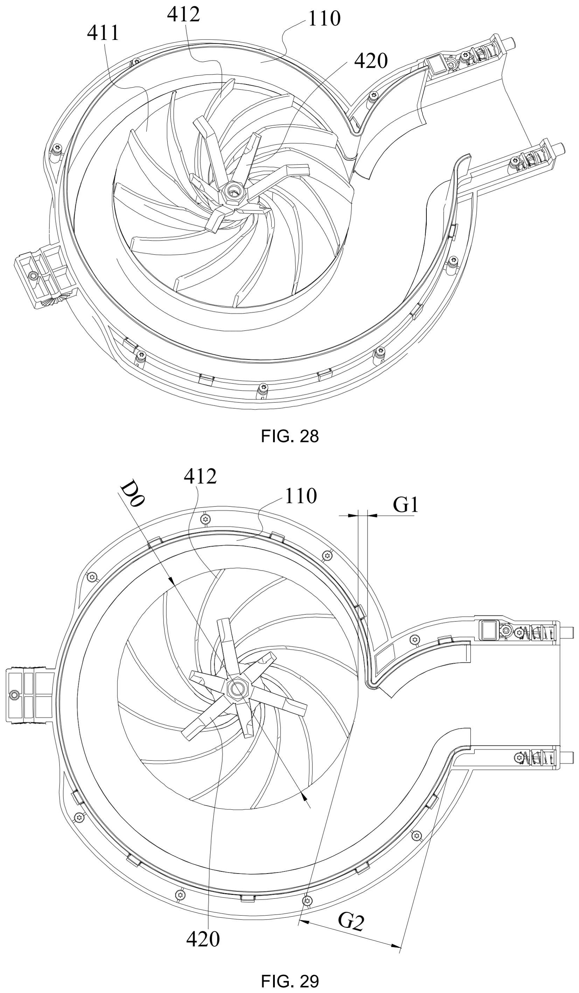

As shown in FIGS. 28 and 28, the inner cavity of the body housing 110 is in the shape of an Archimedes spiral, forming a spiral air duct to throw air out from the air blowing port 102. Therefore, the gap between the outer edge of the support plate 411 and the inner wall of the body housing 110 is not uniform, where the minimum gap G1 is greater than or equal to 7 mm, and the maximum gap G2 is less than or equal to 75 mm. An excessively small minimum gap is prone to generate noise, and an excessively large minimum gap causes efficiency loss. An excessively small or large maximum gap influences the efficiency, and the excessively large maximum gap causes an excessively large size of the entire machine. Therefore, the minimum gap and the maximum gap are reasonably configured so that the noise can be reduced and the efficiency can be improved. In FIG. 29, D0 represents the diameter of each of the first fan blades 412, G1 represents the minimum gap, and G2 represents the maximum gap.

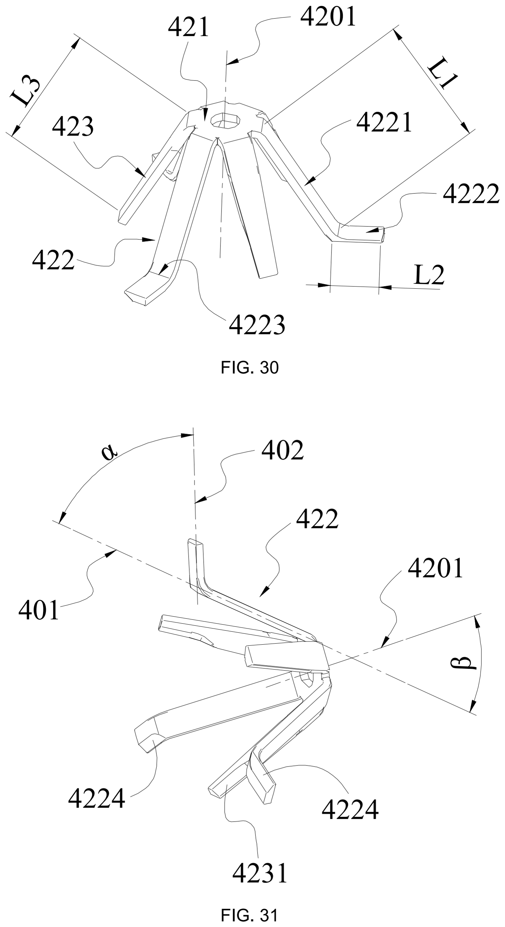

Referring to FIGS. 30 to 34, the cutting assembly 420 includes a base 421 connecting multiple blades and at least three blades, the start point of each of the blades is connected to the base 421, and the base 421 is rotatable about the rotation axis 4201. All the blades on the base 421 may be the same blades, for example, all the blades are first blades 422. All the blades on the base 421 may be classified into two types of blades, which are the first blades 422 and second blades 423, respectively.

In some examples, only the first blades 422 are disposed on the base 421, and the number of the first blades 422 is greater than or equal to three to ensure sufficient cutting efficiency.

In other examples, the first blades 422 and the second blades 423 are disposed on the base 421, and the total number of the blades is greater than or equal to three to ensure a sufficient cutting capability. In an example, the number of the first blades 422 is greater than or equal to one, and the number of the second blades 423 is greater than or equal to two. In another example, the number of the first blades 422 is greater than or equal to two, and the number of the second blades 423 is greater than or equal to one.

In this example, the first blades 422 and the second blades 423 are disposed on the base 421. The number of the first blades 422 is equal to three, the number of the second blades 423 is equal to three, and the first blades 422 and the second blades 423 are disposed alternately to ensure a uniform stress.

The first blades 422 are connected to the base 421 and are rotatable with the base 421 about the rotation axis 4201 to implement a cutting function. Each of the first blades 422 includes a first cutting portion 4221 extending along a first straight line 401 and a second cutting portion 4222 extending along a second straight line 402. The first cutting portion 4221 is connected to the base 421 and located between the base 421 and the second cutting portion 4222. The first straight line 401 does not coincide with the second straight line 402. Through the preceding structural configuration of each of the first blades 422, the first blades 422 are bent to have relatively large cutting areas, better chopping effects, and a relatively high crushing ratio. Thus, the problem in the existing art that incomplete cutting and insufficient chopping cause difficulty in collection and easy blockage is solved.

The first straight line 401 and the second straight line 402 form a first angle, and the first angle is greater than 0 degrees and less than 90 degrees. In FIG. 31, the first angle is represented by α. In an example, the first angle α is greater than or equal to 5 degrees and less than or equal to 85 degrees. In an example, the first angle α is greater than or equal to 10 degrees and less than or equal to 80 degrees. In an example, the first angle α is greater than or equal to 20 degrees and less than or equal to 70 degrees. In an example, the first angle α is greater than or equal to 30 degrees and less than or equal to 70 degrees. In an example, the first angle α is greater than or equal to 40 degrees and less than or equal to 70 degrees. In some examples, the first angle α may be about 45 degrees, 55 degrees, 60 degrees, 65 degrees, or 70 degrees.

A second angle is formed between the first straight line 401 and the rotation axis 4201, and the second angle is less than 90 degrees. In FIG. 31, the second angle is represented by β. In some examples, the second angle β is greater than or equal to 10 degrees and less than or equal to 80 degrees. In some examples, the second angle β is greater than or equal to 20 degrees and less than or equal to 80 degrees. In other examples, the second angle β is greater than or equal to 30 degrees and less than or equal to 70 degrees. In some examples, the second angle β is about 40 degrees, 45 degrees, 50 degrees, 55 degrees, 60 degrees, or 65 degrees.

The start point of the first cutting portion 4221 is connected to the base 421, and the end point of the first cutting portion 4221 is connected to the second cutting portion 4222. The first cutting portion 4221 extends outward in an inclined manner relative to the base 421 in the direction from the start point to the end point, and the second cutting portion 4222 extends outward in an inclined manner relative to the first cutting portion 4221 in the direction from the start point to the end point. The first cutting portion 4221 and the second cutting portion 4222 are each inclined outward so that the cutting assembly 420 has a larger cutting area and a better cutting effect is ensured.

Each of the first blades 422 further includes a transition portion 4223. The transition portion 4223 is located between the first cutting portion 4221 and the second cutting portion 4222 and is substantially arc-shaped. The first cutting portion 4221 and the second cutting portion 4222 are smoothly connected to each other through the transition portion 4223, thereby reducing a stress and facilitating machining and production.

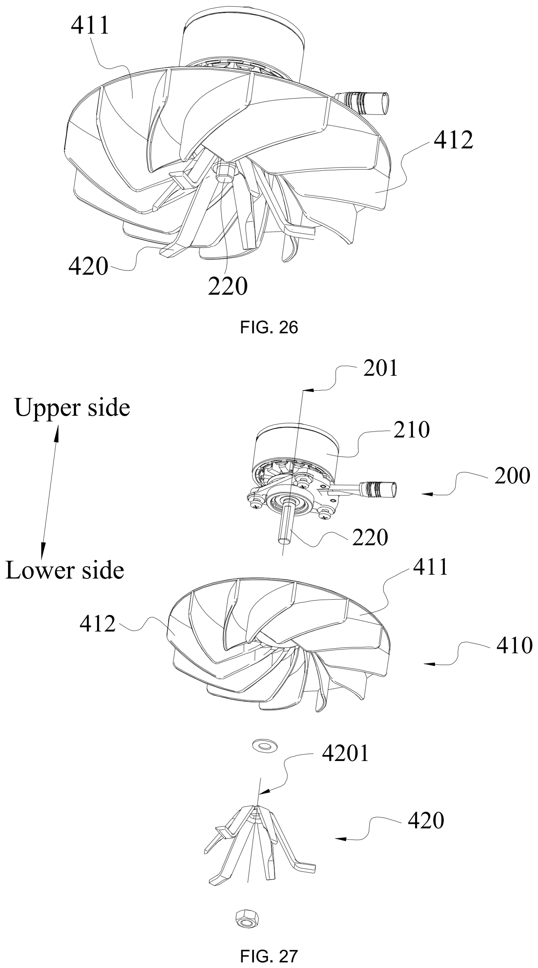

Since the cutting assembly 420 and the fan assembly 410 are each disposed on the motor shaft 220, the cutting assembly 420 cannot interfere with the fan assembly 410. As shown in FIGS. 26 and 28, on the one hand, the ends of the first fan blades 412 close to the middle of the support plate 411 are spaced apart from each other to form an avoidance space in the middle of the support plate 411. Thus, the base 421 of the cutting assembly 420 is conveniently mounted and part of each of the blades is accommodated. On the other hand, the transition portion 4223 is provided in a position, which should ensure that the first cutting portion 4221 and the transition portion 4223 do not interfere with the first fan blades 412 and should also ensure that the second cutting portion 4222 does not interfere with the body housing 110. Therefore, the length of the first cutting portion 4221 along the direction of the first straight line 401 and the length of the second cutting portion 4222 along the direction of the second straight line 402 should each be within a proper range.

The length of the first cutting portion 4221 along the direction of the first straight line 401 is a first length L1, the length of the second cutting portion 4222 along the direction of the second straight line 402 is a second length L2, and the first length L1 is greater than the second length L2. In some examples, the first length L1 is greater than or equal to 35 mm and less than or equal to 80 mm. The second length L2 is greater than or equal to 10 mm and less than or equal to 35 mm. In some examples, the first length L1 is about 50 mm, 55 mm, 60 mm, or 65 mm, and the second length L2 is about 15 mm, 17 mm, or 20 mm.

In some examples, the first length L1 is greater than or equal to 25 mm and less than or equal to 45 mm, and the first length L1 may be about 30 mm, 35 mm, or 40 mm; the second length L2 is greater than or equal to 10 mm and less than or equal to 35 mm, and the second length L2 may be about 15 mm, 20 mm, 25 mm, or 30 mm. In an example, the first length L1 is about 37 mm, and the second length L2 is about 20 mm. In an example, the first length L1 is about 40 mm, and the second length L2 is about 20 mm. In an example, the first length L1 is about 35 mm, and the second length L2 is about 20 mm.

One end of each of the second blades 423 is connected to the base 421, and each of the second blades 423 extends along a third straight line. Through the preceding structural configuration of each of the second blades 423, each of the second blades 423 extends along the straight line and is not bent, and when blockage occurs, the clearing effect can be achieved through the rotation of the second blades 423, and the second blades 423 have the function of avoiding the blockage.

Each of the second blades 423 has a third cutting portion, and the length of the third cutting portion is a third length L3. In an example, the ratio of the difference between the first length L1 and the third length L3 to the third length L3 is less than or equal to 30% or 20%.

Regarding the blades disposed on the base 421, the total blade length of each of the blades is defined as the total length of the connecting line between the start point of the blade and the end point of the blade. The blades include at least two types of blades that are the first blades 422 and the second blades 423, respectively. The total blade length of each of the first blades 422 is greater than the total blade length of each of the second blades 423. In other words, the total blade length of each of the first blades 422 is a first total length T1, the total blade length of each of the second blades 423 is a second total length T2, and the first total length T1 is greater than the second total length T2. The different total lengths of the blades are set so that different cutting ranges are provided, where a relatively high crushing ratio can be achieved through the relatively long blades, and the blockage is avoided through the relatively short blades.

Each of the first blades 422 includes the first cutting portion 4221 and the second cutting portion 4222. The first cutting portion 4221 extends along the first straight line 401, and the second cutting portion 4222 extends along the second straight line 402. The start point of the first cutting portion 4221 is connected to the base 421, and the end point of the first cutting portion 4221 is connected to the transition portion 4223. The first cutting portion 4221 extends outward in an inclined manner relative to the base 421 in the direction from the start point to the end point. The start point of the second cutting portion 4222 is connected to the transition portion 4223, and the second cutting portion 4222 extends outward in an inclined manner relative to the first cutting portion 4221 in the direction from the start point to the end point. Therefore, the total blade length of each of the first blades 422 is the distance between the start point of the first cutting portion 4221 and the end point of the second cutting portion 4222.

The start point of each of the second blades 423 is connected to the base 421, and each of the second blades 423 extends along the third straight line and is not bent. Therefore, the total blade length of each second blade 423 of the second blades 423 is the distance between the start point of the second blade 423 and the end point of the second blade 423.

The first blades 422 are uniformly distributed about the rotation axis 4201 to ensure a uniform stress. One second blade 423 is disposed between two adjacent first blades 422 so that the first blades 422 and the second blades 423 are disposed alternately to ensure a uniform stress.

The first blades 422 and the second blades 423 are located on the same side of the base 421 so that the first blades 422 and the second blades 423 can cooperate with each other to improve the cutting efficiency.

A rotation trajectory of each of the first blades 422 on a plane perpendicular to the rotation axis 4201 forms a circular surface with a diameter that is equal to a first diameter D1, a rotation trajectory of each of the second blades 423 on a plane perpendicular to the rotation axis 4201 forms a circular surface with a diameter that is equal to a second diameter D2, and the ratio D2/D1 of the second diameter D2 to the first diameter D1 is greater than or equal to 0.3 and less than or equal to 0.9. In some examples, D2/D1 is greater than or equal to 0.4 and less than or equal to 0.8. In other examples, D2/D1 is greater than or equal to 0.5 and less than or equal to 0.8. D2/D1 may be specifically 0.65 or 0.7 or 0.75.

Each first blade 422 of the first blades 422 has a first cutting plane 4224, each second blade 423 of the second blades 423 has a second cutting plane 4231, and a third angle is formed between the first cutting plane 4224 and the second cutting plane 4231, which provides more cutting angles. Along the rotation direction of the base 421, the first cutting plane 4224 is provided on the front side of the first blade 422, and the second cutting plane 4231 is provided on the front side of the second blade 423 so that the cutting planes can sufficiently contact the sucked object. Specifically, the first cutting plane 4224 is provided on the second cutting portion 4222 of the first blade 422, and the second cutting plane 4231 is provided on an end portion of the second blade 423.

In an example, a cutting assembly applicable to the blower/vacuum includes: a base rotatable about a rotation axis; a first blade connected to the base, where the first blade is rotatable with the base about the rotation axis to implement a cutting function. The cutting assembly further includes a second blade. The second blade is also rotatable with the base about the rotation axis to implement a cutting function, and the geometric configuration of the second blade is not completely identical to the geometric configuration of the first blade. It is to be noted that deformation formed by the manufacturing process or during use and transportation is not within the scope discussed in the present application.

It is to be noted that the first cutting portion 4221 may or may not include a cutting plane. In this example, the first cutting portion 4221 does not include the cutting plane, but a certain degree of "cutting" may also be performed on sucked fallen leaves during the rotation of the first cutting portion 4221. In this example, the first cutting plane 4224 is formed on the second cutting portion 4222 and performs the main cutting function of the first blade 422.

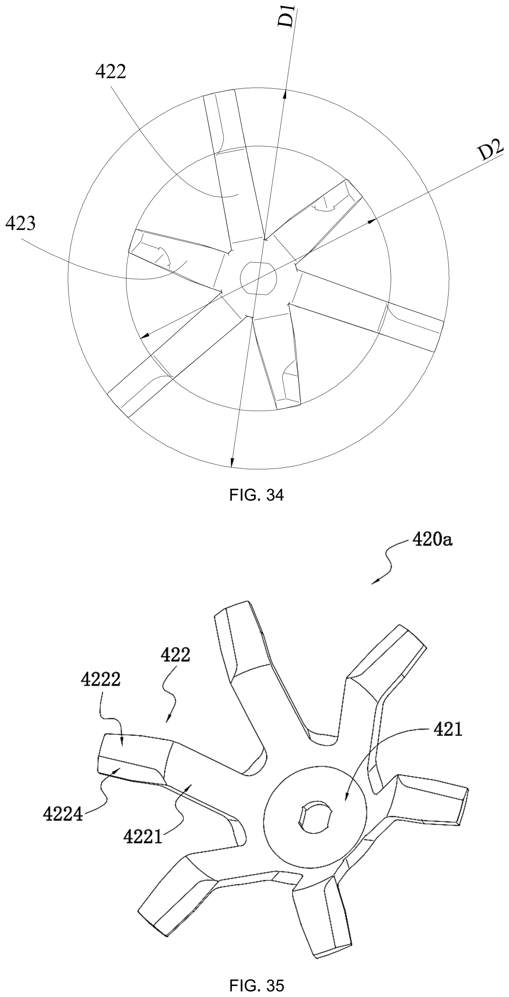

FIG. 35 illustrates an example of a cutting assembly 420a. The cutting assembly 420a includes a base 421 connecting multiple blades and multiple first blades 422, and the base 421 is rotatable about a rotation axis 4201. In this example, six first blades 422 are provided on the base 421 and uniformly spaced along the circumferential direction. In other examples, the number of the first blades 422 may be three, four, five, seven, or eight.

The first blades 422 of the cutting assembly 420a in FIG. 35 have the same characteristics as the first blades 422 of the cutting assembly 420 shown in FIGS. 30 and 31. Each of the first blades 422 includes a first cutting portion 4221 extending along a first straight line 401 and a second cutting portion 4222 extending along a second straight line 402. The first cutting portion 4221 is connected to the base 421 and located between the base 421 and the second cutting portion 4222. The first straight line 401 does not coincide with the second straight line 402. The length of the first cutting portion 4221 along the direction of the first straight line 401 is a first length L1, the length of the second cutting portion 4222 along the direction of the second straight line 402 is a second length L2, and the first length L1 is greater than the second length L2. The first straight line 401 and the second straight line 402 form a first angle α, and the first angle α is greater than 0 degrees and less than 90 degrees. A second angle β is formed between the first straight line 401 and the rotation axis 4201, and the second angle β is less than 90 degrees. The length of the connecting line between the start point of the first blade 422 and the end point of the first blade 422 is a first total length T1. The limitations on the first length L1, the second length L2, the first angle α, the second angle β, and the first total length T1 are the same as those in the related descriptions of FIGS. 30 to 32, and the details are not repeated here.

The present application provides the blower/vacuum. When the air blowing mode is used, the first assembly structure 530 is in the assembled state, the air inlet cover 520 is closed, the air blowing tube 511 is in the mounted position, the identification component 540 identifies the position of the air blowing tube 511, the startup circuit is in the conducting state, and the blower/vacuum is in the ready-to-start state. The user holds the main handle 610 with one hand, which can implement the startup, the shutdown, and the speed regulation. In a startup state, the electric motor 200 drives the fan assembly 410 to rotate to generate a suction force so that the airflow passes through the air inlet cover 520 and enters the air suction port 101 to reach the electric motor 200 and then passes through the air blowing port 102 and flows out of the air blowing tube 511. Meanwhile, the airflow flows in from the heat dissipation port 103, sequentially passes through the control board 300 and the electric motor 200, and then flows out from the air blowing port 102.

When the blower/vacuum needs to be switched to the air suction mode and is in the shutdown state, the limitation on the air blowing tube 511 is removed by operating the second assembly structure 550, and the air blowing tube 511 is ejected outward under the action of the ejection mechanism 560, and after the air blowing tube 511 is detached, the limitation on the air inlet cover 520 is removed by operating the first assembly structure 530, the air inlet cover 520 is rotated to be open, and the hook 114 is exposed. Detaching the air blowing tube 511 and opening the air inlet cover 520 may each be completed through one-hand operation.

When the air suction tube 711 is mounted to the air suction port 101, the palm holds the second handle 7111 on the air suction tube 711 to insert the air suction tube 711 into the hook 114, and the second fitting structure can be switched to the locked state by rotating the air suction tube 711. After the air suction tube 711 is mounted, the connecting portion 720 may be assembled with the conversion member 730, and then the connecting portion 720 is connected to the air suction tube 711, or the connecting portion 720 may be assembled with the air suction tube 711, and then the conversion member 730 is connected to the connecting portion 720.

In this example, the connecting portion 720 is assembled with the conversion member 730, and then the connecting portion 720 is connected to the air suction tube 711. In the process in which the connecting portion 720 is inserted into the side of the conversion member 730, the first fitting structure is locked by rotating the conversion member 730, and then the connecting portion 720 is sleeved on the body housing 110, the connecting portion 720 is engaged with the air suction tube 711 to be locked in the mounted position, the identification component 540 is triggered, the startup circuit is in the conducting state, and the blower/vacuum is in the ready-to-start state. In the startup state, the electric motor 200 drives the fan assembly 410 to rotate to generate the suction force so that the airflow passes through the air suction tube 711 and enters the air suction port 101 to reach the electric motor 200 and then passes the conversion member 730 from the air blowing port 102 to reach the collection bag 740. Meanwhile, the airflow flows in from the heat dissipation port 103, sequentially passes through the control board 300 and the electric motor 200, and then flows out from the air blowing port 102.

When it is necessary to pour out the sucked object in the collection bag 740 and the blower/vacuum is in the shutdown state, the palm holds the operation handle 733 on the conversion member 730, the operation portion of the first fitting structure is within the operable range of the fingers of the same palm, the user operates the first fitting structure to switch the first fitting structure from the locked state to the released state, the conversion member 730 can be detached through one action, and the conversion member 730 is mounted after the sucked object is poured out. The palm holds the operation handle 733 to insert the connecting portion 720 into the conversion member 730. In addition, the operation portion of the first fitting structure is within the operable range of the fingers of the same palm, and the first fitting structure is switched from the released state to the locked state by operating the operation portion.

When the blower/vacuum needs to be switched to the air blowing mode and is in the shutdown state, the elastic engaging hook 723 can be retracted by pressing the elastic engaging hook 723, thereby releasing the second protrusion from the limitation of the elastic engaging hook 723, the connecting portion 720 can be detached by pulling the connecting portion 720, and the conversion member 730 and the collection bag 740 are detached together. When the air suction tube 711 is detached, the second fitting structure is switched from the locked state to the released state so that the side of the air suction tube 711 is separated from the body housing 110. The side of the air suction tube 711 inserted into the body housing 110 is very easy to detach so that the air suction tube 711 is quickly detached. Then, the air inlet cover 520 may be rotated to cause the first assembly structure 530 to be in the assembled state so that the air inlet cover 520 remains in the closed state and the exposure of the cutting assembly 420 is avoided.

In the air suction mode, when the air suction tube 711 is used for perform operations such as the suction of the fallen leaves, to prevent metal pieces such as iron filings from being sucked into the blower/vacuum and adversely affecting the running of the cutting assembly 420, a magnetic member may be disposed at the front end of the air suction tube 711. The magnetic member can suck a metal part in the sucked object, thereby preventing the metal part from being sucked into the blower/vacuum and reducing safety hazards.

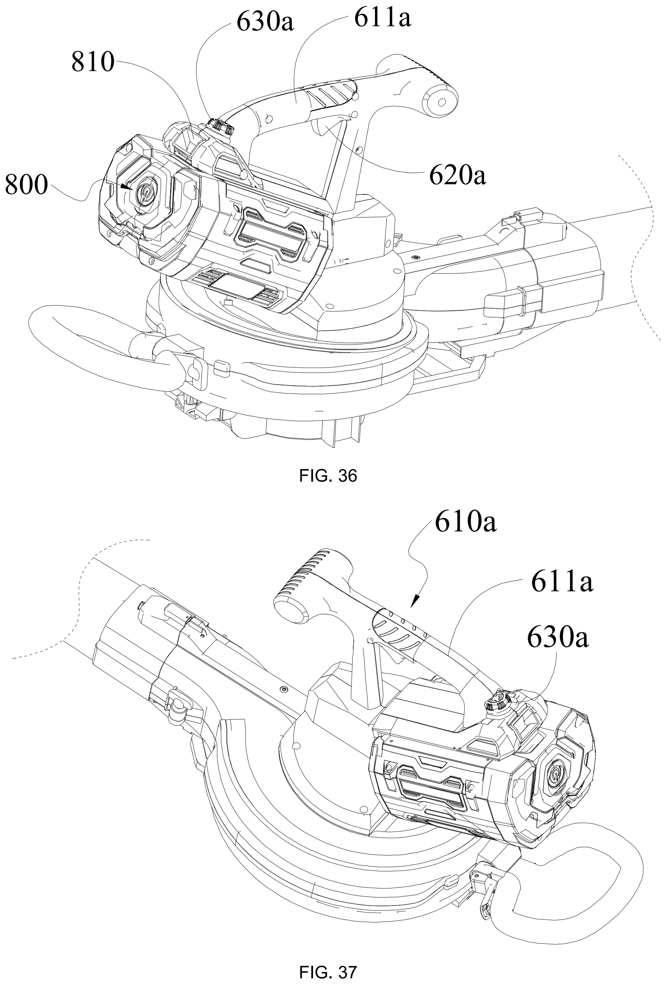

FIGS. 36 and 37 are schematic views of another example of the present application. In the example disclosed in FIGS. 1 and 2, the speed regulation device 630 is disposed on the front side of the holding region 611 and is also disposed on the front side of the main switch 620. With this configuration, whether the blower/vacuum is in the air suction mode or the air blowing mode, the speed regulation device 630 is located on a side of the main switch 620 and is close to the main switch 620, which is convenient for the user to operate.

In the example provided in FIGS. 36 and 37, a speed regulation device 630a is disposed on the rear side of a holding region 611a, disposed on the rear side of a main handle 610a, and also disposed on the rear side of a main switch 620a, and a detachment device 810 is partially disposed on the rear side of the speed regulation device 630. With this configuration, the user may adjust the speed regulation device 630a using the hand different from the hand holding the main handle 610a. In addition, the speed regulation device 630a is on the rear side of the main handle 610a so that the wrist of the hand for holding the main handle 610a does not interfere with the hand operating the speed regulation device 630a, and the design is also convenient for the user.

In addition, the detachment device 810 is disposed on the battery pack 800, and the user operates the detachment device 810 to detach the battery pack 800. In the preceding two different examples, the detachment device 810 is located on the rear side of the main handle 610a and connected to the main handle 610a. The user may hold or put the hand on the main handle 610a when detaching the battery pack 800, which is convenient and effortless.

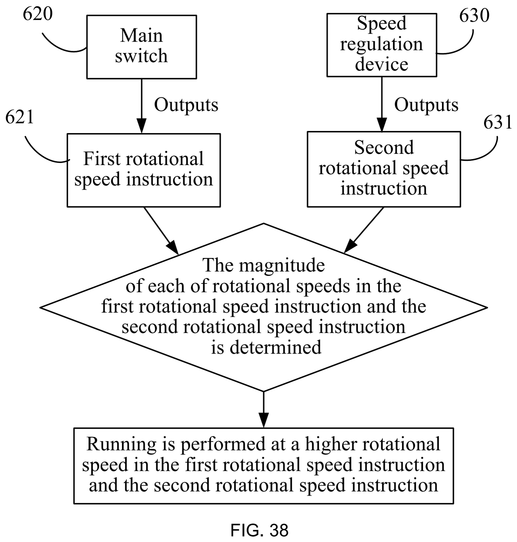

As shown in FIG. 38, the following describes a control mode of the blower/vacuum in the present application.

In this example, the blower/vacuum is provided with the main switch 620 and the speed regulation device 630. The electric motor 200 can be turned on by operating the main switch 620 or the speed regulation device 630 separately so that the electric motor 200 is in a running state. In an example, the user may operate only the main switch 620 to cause the electric motor 200 to start running. The main switch 620 in the form of a trigger is used as an example. The user presses the trigger, and the electric motor 200 starts. The deeper the user presses, the higher the rotational speed to which the electric motor 200 is adjusted. In another example, the user may operate only the speed regulation device 630 to turn on the electric motor. The speed regulation device 630 in the form of a knob is used as an example. The user rotates the knob, and the electric motor 200 starts and runs at a rotational speed limited by the knob.

It is to be noted that when the main switch 620 and the speed regulation device 630 output speed regulation instructions at the same time, the blower/vacuum executes a final instruction with a higher rotational speed in the instructions issued by the main switch 620 and the speed regulation device 630. When the main switch 620 and the speed regulation device 630 output two different rotational speed instructions simultaneously, the electric motor 200 runs at a higher rotational speed in the two different rotational speed instructions. For example, the main switch 620 outputs a first rotational speed instruction 621 indicating that the electric motor 200 runs at a first rotational speed V1, and the speed regulation device 630 outputs a second rotational speed instruction 631 indicating that the electric motor 200 runs at a second rotational speed V2. After collecting the first rotational speed instruction 621 and the second rotational speed instruction 631, the control board 300 compares the first rotational speed V1 with the second rotational speed V2 to determine which is higher. Then, the higher rotational speed is fed back to the electric motor 200 so that the electric motor 200 runs at the higher rotational speed.

Now, a common working condition is used as an example to illustrate the benefits of the preceding control mode. When the user needs the electric motor 200 to constantly output a preset rotational speed T1 for a long time, the speed regulation device 630 can be adjusted to a required rotational speed value. In addition, the operation on the main switch 620 is stopped, that is, the main switch 620 outputs a zero rotational speed. Thus, the electric motor 200 runs at the preset rotational speed T1 outputted by the speed regulation device 630, thereby greatly easing the tension of the finger generated by long-time operation on the main switch 620. When a sudden acceleration is required for a period of time in the working condition, the user can quickly operate the main switch 620 to implement the acceleration. After the electric motor 200 is accelerated to a third rotational speed T2 and remains at the third rotational speed T2 for a period of time (or the electric motor 200 may not remain at the third rotational speed T2), the operation on the main switch 620 is stopped. In this case, the main switch 620 outputs a zero rotational speed, and the electric motor 200 returns to the preset rotational speed T1. With this configuration, the user can conveniently adjust the rotational speed without operating a particular switch (such as pressing and rotating the switch) for a long time. This configuration greatly enhances user comfort in the operation of the machine and enables rapid adjustment of the blower/vacuum at different rotational speeds.

It is to be noted that the preceding control mode is not only applicable to blowers/vacuums but also applicable to different power tools such as blowers, electric drills, electric wrenches, and angle grinders.

In addition, all technical solutions relating to the present application are not only applicable to blowers/vacuums but also applicable to power tools that can perform similar functions, such as blowers and vacuums.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A blower/vacuum, comprising:
a body housing;
a control board having a startup circuit for controlling the blower/vacuum to start or shut down;
an air suction port that is capable of connecting an air inlet cover, wherein the air inlet cover has an open state and a closed state, and when the air inlet cover is in the closed state, an airflow is capable of entering the air suction port through the air inlet cover;
an air blowing port that is capable of connecting an air blowing tube, wherein the air blowing tube has a mounted position and an unmounted position, the startup circuit is in an non-conducting state and the blower/vacuum is in a shutdown state when the air blowing tube is in the unmounted position, and the startup circuit is in an conducting state and the blower/vacuum is in a ready-to-start state when the air blowing tube is in the mounted position; and
a first assembly structure for assembling the air blowing tube, wherein the air inlet cover is in the closed state and the air blowing tube is capable of being mounted to the mounted position when the first assembly structure is in an assembled state, and the air inlet cover is in the open state and the air blowing tube is incapable of being mounted to the mounted position when the first assembly structure is in a non-assembled state.

2. The blower/vacuum according to claim 1, further comprising an identification component configured to identify a position of the air blowing tube, wherein the startup circuit is in the conducting state when the identification component identifies that the air blowing tube is in the mounted position.

3. The blower/vacuum according to claim 1, wherein the first assembly structure comprises a first fitting portion and a second fitting portion, one of the air inlet cover and the body housing is provided with the first fitting portion, the other of the air inlet cover and the body housing is provided with the second fitting portion, and the first fitting portion and the second fitting portion fit each other to lock the air inlet cover and the body housing.

4. The blower/vacuum according to claim 3, wherein one end of the air inlet cover is rotatably connected to the body housing, and the other end of the air inlet cover is selectively engaged with the body housing.

5. The blower/vacuum according to claim 4, wherein the first fitting portion comprises a first engaging protrusion, the second fitting portion comprises a first engaging hook, and the first engaging protrusion is capable of being engaged with the first engaging hook.

6. The blower/vacuum according to claim 1, further comprising a second assembly structure for connecting the air blowing tube to the air inlet cover, wherein when the air blowing tube is in the mounted position, the air blowing tube is sleeved on the body housing, and the second assembly structure is in an assembled state to lock the air blowing tube and the air inlet cover.

7. The blower/vacuum according to claim 6, wherein the second assembly structure comprises a second engaging protrusion and a second engaging hook, one of the air inlet cover and the air blowing tube is provided with the second engaging protrusion, the other of the air inlet cover and the air blowing tube is provided with the second engaging hook, and the second engaging protrusion and the second engaging hook are capable of being engaged with each other.

8. The blower/vacuum according to claim 2, wherein the identification component is a contact switch or a non-contact switch, and the non-contact switch is one or more of a photoelectric switch, a pressure switch, and a Hall switch.

9. The blower/vacuum according to claim 8, wherein the identification component is the Hall switch, the Hall switch comprises a Hall sensor and a magnet, the Hall sensor is disposed on the body housing, the magnet is disposed on the air blowing tube, and the Hall sensor is capable of sensing the magnet.

10. The blower/vacuum according to claim 1, further comprising an ejection mechanism, wherein the ejection mechanism is disposed on the body housing, and the ejection mechanism applies thrust to the air blowing tube along a separation direction when the air blowing tube is separated from the body housing.

11. A blower/vacuum, comprising:
a body housing;
an electric motor disposed in the body housing;
a connecting housing disposed on a side of the body housing;
a control board having a startup circuit for controlling the blower/vacuum to start or shut down and disposed in the connecting housing;
an air inlet cover and an air suction port, wherein an airflow passes through the air inlet cover and enters the air suction port to reach the electric motor, the air inlet cover has an open state and a closed state, and the airflow is capable of passing through the air inlet cover and entering the air suction port when the air inlet cover is in the closed state;
an air blowing tube and an air blowing port, wherein the air blowing tube has a mounted position and an unmounted position, the startup circuit is in an non-conducting state and the blower/vacuum is in a shutdown state when the air blowing tube is in the unmounted position, and the startup circuit is in an conducting state and the blower/vacuum is in a ready-to-start state when the air blowing tube is in the mounted position; and
a first assembly structure for assembling the air blowing tube, wherein the air inlet cover is in the closed state and the air blowing tube is capable of being mounted to the mounted position when the first assembly structure is in an assembled state, and the air inlet cover is in the open state and the air blowing tube is incapable of being mounted to the mounted position when the first assembly structure is in a non-assembled state.

12. The blower/vacuum according to claim 11, wherein the air blowing tube is detachably disposed at the air blowing port.

13. The blower/vacuum according to claim 11, wherein the blower/vacuum has an air blowing mode and an air suction mode, and when the blower/vacuum is in the air blowing mode, the air inlet cover is closed, and the airflow passes through the air inlet cover, enters the air suction port to reach the electric motor, and then passes through the air blowing port and flows out of the air blowing tube.

14. The blower/vacuum according to claim 11, wherein the air suction port and the air blowing port are each provided on the body housing, and the air inlet cover and the air blowing tube are each connected to the body housing.

15. The blower/vacuum according to claim 11, further comprising an identification component configured to identify a position of the air blowing tube, wherein the startup circuit is in the conducting state when the identification component identifies that the air blowing tube is in the mounted position.

16. The blower/vacuum according to claim 11, wherein the first assembly structure comprises a first fitting portion and a second fitting portion, one of the air inlet cover and the body housing is provided with the first fitting portion, the other of the air inlet cover and the body housing is provided with the second fitting portion, and the first fitting portion and the second fitting portion fit each other to lock the air inlet cover and the body housing.

17. The blower/vacuum according to claim 16, wherein one end of the air inlet cover is rotatably connected to the body housing, and the other end of the air inlet cover is selectively engaged with the body housing.

18. The blower/vacuum according to claim 11, further comprising a second assembly structure for connecting the air blowing tube to the air inlet cover, wherein when the air blowing tube is in the mounted position, the air blowing tube is sleeved on the body housing, and the second assembly structure is in an assembled state to lock the air blowing tube and the air inlet cover.

19. The blower/vacuum according to claim 15, wherein the identification component is a contact switch or a non-contact switch, and the non-contact switch is one or more of a photoelectric switch, a pressure switch, and a Hall switch.

20. The blower/vacuum according to claim 11, further comprising an ejection mechanism, wherein the ejection mechanism is disposed on the body housing, and the ejection mechanism applies thrust to the air blowing tube along a separation direction when the air blowing tube is separated from the body housing.

21. A cutting assembly applicable to a blower/vacuum, comprising:
a base rotatable about a rotation axis; and
a first blade connected to the base, wherein the first blade is rotatable with the base about the rotation axis to implement a cutting function;
wherein the first blade comprises a first cutting portion and a second cutting portion, the first cutting portion extends substantially along a first straight line, the second cutting portion extends substantially along a second straight line, the first cutting portion is connected to the base, the first cutting portion is located between the base and the second cutting portion, and the first straight line does not coincide with the second straight line; and
a length of the first cutting portion along a direction of the first straight line is a first length L1, a length of the second cutting portion along a direction of the second straight line is a second length L2, and the first length L1 is greater than the second length L2.

22. The cutting assembly according to claim 21, wherein the first straight line and the second straight line form a first angle, and the first angle is greater than 10 degrees and less than 80 degrees.

23. The cutting assembly according to claim 21, wherein the first blade further comprises a transition portion located between the first cutting portion and the second cutting portion, and the transition portion is substantially arc-shaped.

24. The cutting assembly according to claim 23, wherein a start point of the first cutting portion is connected to the base, an end point of the first cutting portion is connected to the transition portion, and the first cutting portion extends outward in an inclined manner relative to the base in a direction from the start point to the end point, and a start point of the second cutting portion is connected to the transition portion, and the second cutting portion extends outward in an inclined manner relative to the first cutting portion in a direction from the start point to an end point.

25. The cutting assembly according to claim 21, wherein a number of first blades is greater than or equal to three.

26. The cutting assembly according to claim 21, wherein the first straight line and the second straight line form a first angle, and the first angle is greater than 20 degrees and less than 80 degrees.

27. The cutting assembly according to claim 21, further comprising a second blade, wherein one end of the second blade is connected to the base, and the second blade extends along a third straight line.

28. The cutting assembly according to claim 27, wherein the second blade has a third cutting portion, a length of the third cutting portion along a direction of the third straight line is a third length L3, and a ratio of a difference between the first length L1 and the third length L3 to the third length L3 is less than or equal to 30%.

29. The cutting assembly according to claim 27, wherein a number of first blades is six.

30. The cutting assembly according to any one of claims 21 to 26, wherein a second angle is formed between the first straight line and the rotation axis, and the second angle is greater than 10 degrees and less than 80 degrees.

31. A cutting assembly applicable to a blower/vacuum, comprising:
blades; and
a base, wherein a start point of each blade among the blades is connected to the base, and the base is rotatable about a rotation axis;
wherein a total blade length of the blade is defined as a total length of a connecting line between the start point of the blade and an end point of the blade, the blades comprise a at least first blades and second blade, a total blade length of each of the first blades is a first total length, a total blade length of each of the second blades is a second total length, and the first total length is greater than the second total length.

32. The cutting assembly according to claim 31, wherein a number of the first blades is at least three.

33. The cutting assembly according to claim 32, wherein the number of the first blades is three, and a number of the second blades is three.

34. The cutting assembly according to claim 31, wherein the first blades are uniformly distributed about the rotation axis.

35. The cutting assembly according to claim 34, wherein the first blades and the second blades are on a same side of the base.

36. The cutting assembly according to claim 31, wherein each of the first blades comprises a first cutting portion and a second cutting portion, a start point of the first cutting portion is connected to the base, an end point of the first cutting portion is connected to the second cutting portion, and the first cutting portion extends outward in an inclined manner relative to the base in a direction from the start point to the end point; and
a start point of the second cutting portion is connected to the first cutting portion, and the second cutting portion extends outward in an inclined manner relative to the first cutting portion in a direction from the start point to an end point.

37. The cutting assembly according to claim 36, wherein the first cutting portion extends along a first straight line, the second cutting portion extends along a second straight line, and the first straight line and the second straight line form a first angle.

38. The cutting assembly according to claim 37, wherein a second angle is formed between the first straight line and the rotation axis.

39. The cutting assembly according to claim 31, wherein a rotation trajectory of each of the first blades on a plane perpendicular to the rotation axis forms a circular surface with a diameter that is equal to a first diameter D1, a rotation trajectory of each of the second blades on a plane perpendicular to the rotation axis forms a circular surface with a diameter that is equal to a second diameter D2, and a ratio D2/D1 of the second diameter to the first diameter is greater than or equal to 0.3 and less than or equal to 0.9.

40. The cutting assembly according to claim 31, wherein each of the first blades has a first cutting plane, each of the second blades has a second cutting plane, and a third angle is formed between the first cutting plane and the second cutting plane.

41. A blower/vacuum, comprising:
a housing having a heat dissipation port and an air blowing port;
an electric motor disposed in the housing;
a control board electrically connected to the electric motor; and
a fan assembly connected to the electric motor, wherein the fan assembly is driven by the electric motor to generate an airflow;
wherein when the fan assembly rotates, at least part of the airflow flows in from the heat dissipation port, sequentially passes through the control board and the electric motor, and then flows out from the air blowing port.

42. The blower/vacuum according to claim 41, wherein the control board is disposed on a side of the electric motor facing away from the fan assembly.

43. The blower/vacuum according to claim 41, wherein a linear distance between the heat dissipation port and the control board is less than or equal to 5 cm.

44. The blower/vacuum according to claim 41, wherein the housing comprises a body housing and a connecting housing disposed on a side of the body housing, the electric motor is disposed in the body housing, the control board is disposed in the connecting housing, and the heat dissipation port is provided on the connecting housing.

45. The blower/vacuum according to claim 44, further comprising a main handle, wherein the main handle is provided on a side of the connecting housing facing away from the body housing.

46. The blower/vacuum according to claim 41, wherein the housing is provided with an air suction port corresponding to the fan assembly, and the airflow flows in from the air suction port, passes through the electric motor, and then flows out from the air blowing port.

47. The blower/vacuum according to claim 46, further comprising an air inlet cover, wherein the air inlet cover is disposed at the air suction port in an openable and closable manner.

48. The blower/vacuum according to claim 41, wherein the electric motor has an upper side and a lower side, and the control board and the fan assembly are located on the upper side of the electric motor and the lower side of the electric motor, respectively.

49. The blower/vacuum according to claim 48, wherein at least part of the airflow flows through the electric motor from the lower side of the electric motor when the fan assembly rotates.

50. The blower/vacuum according to claim 41, wherein the electric motor is a brushless motor.

51. A blower/vacuum, comprising:
an electric motor; and
a cutting assembly at least partially disposed in a first cavity housing, wherein a sucked object is capable of passing the cutting assembly and being discharged out of the first cavity housing;
wherein the first cavity housing comprises an outer housing and a lining body, the outer housing is disposed on an outer side of the lining body, the outer housing is made of a first material, the lining body is made of a second material, impact strength of the second material is greater than impact strength of the first material, and the impact strength of the second material is greater than or equal to 20 kJ/m².

52. The blower/vacuum according to claim 51, wherein the impact strength of the second material is greater than or equal to 30 kJ/m².

53. The blower/vacuum according to claim 51, wherein the impact strength of the first material is greater than or equal to 5 kJ/m² and less than or equal to 20 kJ/m².

54. The blower/vacuum according to claim 51, wherein hardness of the first material is greater than hardness of the second material.

55. The blower/vacuum according to claim 51, wherein the impact strength of the second material is greater than or equal to 40 kJ/m².

56. The blower/vacuum according to claim 51, wherein the impact strength of the second material is greater than or equal to 50 kJ/m².

57. The blower/vacuum according to claim 51, further comprising a fan assembly, wherein at least part of the fan assembly is accommodated in the first cavity housing, and the fan assembly is driven by the electric motor to generate an airflow.

58. The blower/vacuum according to any one of claims 51 to 57, further comprising a body housing, wherein the electric motor is disposed in the body housing, and at least part of the body housing forms the first cavity housing.

59. The blower/vacuum according to claim 58, wherein the body housing has an air suction port and an air blowing port, the air suction port and the air blowing port each communicate with an inner cavity of the first cavity housing, and the cutting assembly is disposed close to the air suction port.

60. The blower/vacuum according to claim 58, wherein the body housing comprises a first volute and a second volute which are configured to be snap-fitted with each other, and limiting protrusions are provided on a peripheral surface of the lining body and are sandwiched between the first volute and the second volute.

61. A blower/vacuum, comprising:
a body housing;
an air suction port to which an air suction tube is mountable; and
an air blowing port, wherein when the blower/vacuum is in an air suction mode, an airflow flows from the air suction tube into the air suction port and then flows out through the air blowing port;
wherein the blower/vacuum further comprises:
a conversion member for mounting a collection bag, wherein the collection bag is used for storing an object sucked by the air suction tube, the conversion member has a collection port, the sucked object enters the collection bag from the collection port, and an area of the collection port is greater than or equal to 250 square centimeters.

62. The blower/vacuum according to claim 61, wherein the area of the collection port is greater than or equal to 300 square centimeters.

63. The blower/vacuum according to claim 62, wherein the area of the collection port is greater than or equal to 350 square centimeters.

64. The blower/vacuum according to claim 61, further comprising a connecting portion, wherein the conversion member is connected to the connecting portion, and the connecting portion is disposed on or detachably connected to the body housing, wherein the air blowing port is opened and the collection bag is incapable of performing collection when the connecting portion and the conversion member are released from each other, and the air blowing port is closed and the collection bag is capable of performing the collection when the connecting portion and the conversion member are locked to each other.

65. The blower/vacuum according to claim 64, wherein one side of the connecting portion is rotatably connected to the conversion member, and the other side of the connecting portion and the conversion member are locked to or released from each other through a first fitting structure.

66. The blower/vacuum according to claim 65, wherein the first fitting structure is capable of being switched between a locked state and a released state through one-hand operation.

67. The blower/vacuum according to claim 64, wherein one of the connecting portion and the conversion member is provided with a first support shaft, the other of the connecting portion and the conversion member is provided with a first groove, the first support shaft is insertable into the first groove, and the conversion member is rotatable about an axis of the first support shaft.

68. The blower/vacuum according to claim 65, wherein the first fitting structure comprises a third engaging protrusion and an operation member, the third engaging protrusion is disposed on the connecting portion, the operation member is disposed on the conversion member, the operation member is capable of being engaged with the third engaging protrusion to be in a locked state, and the first fitting structure is capable of being switched from the locked state to a released state by pressing the operation member.

69. The blower/vacuum according to claim 64, wherein the connecting portion is detachably mounted to the body housing.

70. The blower/vacuum according to claim 69, wherein an operation handle for a user to operate is disposed on the conversion member, the conversion member further comprises the operation member for the user to operate to move the conversion member relative to the connecting portion, and the operation member is configured to be capable of being operated by a hand holding the operation handle when the user holds the operation handle, so as to unlock the conversion member and the connecting portion.

71. A blower/vacuum, comprising:
a body housing;
an electric motor disposed in the body housing; and
a battery pack coupling portion for mounting a battery pack, wherein the electric motor is powered by the battery pack;
wherein power of the electric motor is greater than 1000 W.

72. The blower/vacuum according to claim 71, wherein the electric motor is a brushless motor.

73. A blower/vacuum, comprising:
a body housing;
an electric motor disposed in the body housing; and
a battery pack coupling portion for mounting a battery pack, wherein the electric motor is powered by the battery pack;
wherein the blower/vacuum has an air blowing mode, and thrust of the blower/vacuum is greater than 14.5 N in the air blowing mode.

74. The blower/vacuum according to claim 73, wherein the electric motor is a brushless motor.

75. A blower/vacuum, comprising:
a body housing;
an electric motor disposed in the body housing; and
a battery pack coupling portion for mounting a battery pack, wherein the electric motor is powered by the battery pack;
wherein a capacity of the battery pack is greater than or equal to 6 AH, and power of the electric motor is greater than 1200 W.

76. The blower/vacuum according to claim 75, wherein at least two battery packs are provided.

77. The blower/vacuum according to claim 75, wherein the electric motor is a brushless motor.

78. The blower/vacuum according to claim 75, wherein the blower/vacuum has an air blowing mode, and thrust of the blower/vacuum is greater than 14.5 N in the air blowing mode.

79. A cutting assembly applicable to a blower/vacuum, comprising:
blades; and
a base, wherein a start point of each of the blades is connected to the base, and the base is rotatable about a rotation axis;
wherein the blades comprise at least a first blade and a second blade, a rotation trajectory of the first blade on a plane perpendicular to the rotation axis forms a circular surface with a diameter that is a first diameter, a rotation trajectory of the second blade on a plane perpendicular to the rotation axis forms a circular surface with a diameter that is a second diameter, and the first diameter is different from the second diameter.

80. The cutting assembly according to claim 79, wherein a ratio of the second diameter to the first diameter is greater than or equal to 0.3 and less than or equal to 0.9.

81. A blower/vacuum, comprising:
a body housing;
an electric motor disposed in the body housing; and
a battery pack coupling portion for mounting a battery pack, wherein the electric motor is powered by the battery pack;
wherein the electric motor is a brushless motor, and power of the electric motor is greater than 1000 W; and
the blower/vacuum has an air blowing mode and an air suction mode, and thrust of the blower/vacuum is greater than 14.5 N in the air blowing mode.

82. The blower/vacuum according to claim 81, wherein a capacity of the battery pack is greater than or equal to 6 AH.

83. The blower/vacuum according to claim 81, wherein the power of the electric motor is greater than 1200 W.

84. The blower/vacuum according to claim 81, wherein at least two battery packs are provided.

85. The blower/vacuum according to claim 81, wherein a capacity of the battery pack is greater than or equal to 6 AH, and the power of the electric motor is greater than 1200 W.

86. The blower/vacuum according to claim 81, wherein the thrust of the blower/vacuum is greater than 15.5 N.

87. The blower/vacuum according to claim 81, wherein a maximum rotational speed of the electric motor is greater than or equal to 8000 rpm.

88. The blower/vacuum according to claim 81, wherein a maximum air volume of the blower/vacuum is greater than or equal to 480 cfm.

89. The blower/vacuum according to claim 81, wherein a maximum wind speed of the blower/vacuum is greater than or equal to 100 mph.

90. The blower/vacuum according to claim 81, wherein a rated voltage of the battery pack is greater than or equal to 40 V.

91. A cutting assembly applicable to a blower/vacuum, comprising:
a base rotatable about a rotation axis; and
a first blade connected to the base, wherein the first blade is rotatable with the base about the rotation axis to implement a cutting function;
wherein
the first blade comprises a first cutting portion and a second cutting portion, the first cutting portion is connected to the base, the first cutting portion is located between the base and the second cutting portion, and the second cutting portion extends outward in an inclined manner relative to the first cutting portion in a direction from a start point to an end point; and
a length of the first cutting portion is a first length L1, a length of the second cutting portion is a second length L2, and the first length L1 is greater than the second length L2.

92. The cutting assembly according to claim 91, wherein the first cutting portion extends substantially along a first straight line, and the second cutting portion extends substantially along a second straight line.

93. The cutting assembly according to claim 92, wherein the first straight line and the second straight line form a first angle, and the first angle is greater than 10 degrees and less than 80 degrees.

94. The cutting assembly according to claim 91, wherein the first blade further comprises a transition portion, the transition portion is located between the first cutting portion and the second cutting portion, and the transition portion is substantially arc-shaped.

95. The cutting assembly according to claim 94, wherein a start point of the first cutting portion is connected to the base, an end point of the first cutting portion is connected to the transition portion, and the first cutting portion extends outward in an inclined manner relative to the base in a direction from the start point to the end point.

96. The cutting assembly according to claim 91, wherein a number of first blades is greater than or equal to three.

97. The cutting assembly according to claim 92, wherein the first straight line and the second straight line form a first angle, and the first angle is greater than 20 degrees and less than 80 degrees.

98. The cutting assembly according to claim 91, further comprising a second blade, wherein one end of the second blade is connected to the base, and the second blade extends along a third straight line.

99. The cutting assembly according to claim 98, wherein the second blade has a third cutting portion, a length of the third cutting portion along a direction of the third straight line is a third length L3, and a ratio of a difference between the first length L1 and the third length L3 to the third length L3 is less than or equal to 30%.

100. The cutting assembly according to claim 91, wherein a number of first blades is six.

101. The cutting assembly according to claim 92, wherein a second angle is formed between the first straight line and the rotation axis, and the second angle is greater than 10 degrees and less than 80 degrees.

102. A cutting assembly applicable to a blower/vacuum, comprising:
a base rotatable about a rotation axis;
a first blade connected to the base, wherein the first blade is rotatable with the base about the rotation axis to implement a cutting function;
wherein the cutting assembly further comprises:
a second blade, wherein the second blade is also rotatable with the base about the rotation axis to implement a cutting function, and a geometric configuration of the second blade is not completely identical to a geometric configuration of the first blade.
